# EUROPEAN PATENT SPECIFICATION

(11) **EP 4 177 176 B1**
(45) Date of publication and mention of the grant of the patent: **30.04.2025**
(21) Application number: 22205192.2
(22) Date of filing: 03.11.2022
(51) Int. Cl.: B65B 65/02, B65B 51/30, B65B 9/207, B29C 65/02

(54) **TRANSVERSE SEALING DEVICE, METHOD FOR OPERATING THE TRANSVERSE SEALING DEVICE AND VERTICAL FORM FILL SEALING MACHINE**
QUERSIEGELVORRICHTUNG, VERFAHREN ZUM BETREIBEN DER QUERSIEGELVORRICHTUNG UND VERTIKALE FORM-FÜLLSIEGELMASCHINE
DISPOSITIF DE SCELLEMENT TRANSVERSAL, PROCÉDÉ DE FONCTIONNEMENT DU DISPOSITIF DE SCELLEMENT TRANSVERSAL ET MACHINE DE FORMAGE-REMPLISSAGE-FERMETURE VERTICALE

(30) Priority: 05.11.2021 DE 102021128882
(43) Date of publication of application: 10.05.2023
(73) Proprietor: Syntegon Packaging Solutions B.V., 6001 SE Weert (NL)
(72) Inventor: Castermans, Marc, 6001 SE Weert (NL)
(74) Representative: Novagraaf Group

(56) References cited:
- US-A- 5 791 126
- US-A1- 2013 298 502
- US-A1- 2015 089 904

## Description

### State of the art

A transverse sealing device for sealing a package or a packaging material, comprising at least two sealing jaws, comprising at least one guide unit to guide a movement of the at least two sealing jaws, comprising at least one movement unit to move the at least two sealing jaws translationally relative to each other along a direction parallel to a horizontal movement axis of the guide unit and to move the at least two sealing jaws translatory along a vertical movement axis of the guide unit and comprising at least two drive units to drive the movement unit has already been proposed.

US 2015/089904 A1, US 2013/298502 A1 and US 5,791,126 A disclose transverse sealing devices for sealing a package or a packaging material, wherein these known transverse sealing devices comprise at least one guide unit to guide a movement of the at least two sealing jaws, at least one movement unit to move the at least two sealing jaws translationally along a direction parallel to a horizontal movement axis of the at least two sealing jaws and to move the at least two sealing jaws translationally relative to each other along a direction parallel to a vertical movement axis of the guide unit and at least two drive units to drive the movement unit.

### Disclosure of the invention

The invention is based on a transverse sealing device for sealing a package or a packaging material, comprising at least two sealing jaws, comprising at least one guide unit to guide a movement of the at least two sealing jaws, comprising at least one movement unit to move the at least two sealing jaws translationally relative to each other along a direction parallel to a horizontal movement axis of the guide unit and to move the at least two sealing jaws translationally along a direction parallel to a vertical movement axis of the guide unit and comprising at least two drive units to drive the movement unit, wherein the at least two drive units are connected to each other by the movement unit in such a way that a horizontal movement and/or a vertical movement of the at least two sealing jaws is generatable by a joint drive of the movement unit by means of the at least two drive units.

According to the invention a horizontal movement or a vertical movement of the at least two sealing jaws is only generatable by a drive by all of the at least two drive units. The horizontal movement and/or the vertical movement of the at least two sealing jaws is preferably relative to a frame of the transverse sealing device, to which the at least two sealing jaws are in particular movably, particularly preferably linearly movably, attached. Preferably by the fact that a horizontal movement and/or a vertical movement of the at least two sealing jaws is generatable by a joint drive of the movement unit by means of the at least two drive units is here to be understood that if at least one of the at least two drive units is in a resting state, the movement unit is blocked from any movement, in particular other than vibrational movements causable by a drive of the movement unit by only one of the at least two drive units, to generate a horizontal movement and/or a vertical movement of the at least two sealing jaws. Preferably, the at least two drive units are embodied different from the movement unit. Particularly preferable, the movement unit is embodied different from the guide unit of the transverse sealing device, in particular at least embodied differently from non-movable guide elements of the transverse sealing device relative to the frame, in particular the guide unit. The at least two sealing jaws are preferably, in particular linearly, movably supported, along the direction parallel to the horizontal movement axis of the guide unit. The at least two sealing jaws are preferably, in particular linearly, movably supported, along the direction parallel to a vertical movement axis of the guide unit.

It is conceivable that the guide unit comprises at least one guide element to guide the at least two sealing jaws during the vertical movement, in particular relative to the frame of the transverse sealing device. In particular, a main extension axis of the at least one guide element of the guide unit is at least substantially perpendicular to the horizontal movement axis of the guide unit. By a "main extension axis" of an object is herein in particular an axis to be understood which extends parallel to a longest edge of a smallest geometric rectangular cuboid that just still completely encloses the object. The main extension axis of the at least one guide element of the guide unit preferably is at least substantially parallel to the vertical movement axis of the guide unit.

The at least one guide element of the guide unit is exemplary embodied as a guide rod or as another guide element that appears reasonable to a person skilled in the art. It is also conceivable that the transverse sealing device, in particular the guide unit, comprises preferably at least one further guide element to guide the at least two sealing jaws during the horizontal movement of the at least two sealing jaws relative to each other. In particular, a main extension axis of the at least one further guide element of the guide unit is at least substantially parallel to the horizontal movement axis of the guide unit. The main extension axis of the at least one further guide element of the guide unit preferably is at least substantially perpendicular to the vertical movement axis of the guide unit. It is conceivable that the at least one guide element of the guide unit and the at least one further guide element of the guide unit are embodied identically or embodied different from each other.

Preferably the at least two sealing jaws are configured to seal a packaging material, which is in particular arrangeable between the at least two sealing jaws. Each of the at least two sealing jaws has a sealing surface. Preferably, the sealing surfaces of the at least two sealing jaws are arranged facing each other. The sealing surfaces of the at least two sealing jaws are preferably in contact with the packaging material in the sealing position to form a sealing in the packaging material. In particular, the sealing surfaces of the at least two sealing jaws run at least substantially parallel to each other. Preferably, the horizontal movement axis of the guide unit runs at least substantially perpendicularly to the sealing surfaces of the at least two sealing jaws. The term "substantially perpendicularly" is here in particular to mean an orientation of a direction relative to a reference direction, wherein the direction and the reference direction, in particular viewed in a projection plane, include a 90° angle and the angle has a maximum deviation of in particular less than 8°, advantageously less than 5° and especially advantageously less than 2°. The sealing surfaces of the at least two sealing jaws run preferably at least substantially parallel to the horizontal movement axis of the guide unit. The term "substantially parallel" is here in particular to mean an orientation of a direction relative to a reference direction, in particular in a plane, wherein the direction relative to the reference direction has a deviation smaller than 8°, advantageously smaller than 5° and especially advantageously smaller than 2°.

The movement unit is preferably configured to convert a power generatable by the at least two drive units to the at least two sealing jaws into a horizontal movement of the at least two sealing jaws relative to each other and/or to generate a vertical movement of the at least two sealing jaws, in particular relative to the frame. In particular, the vertical movement of the at least two sealing jaws runs along a vertical movement axis of the guide unit. The vertical movement axis preferably extends at least substantially parallel to the horizontal movement axis. Preferably, the movement unit is drivable by the joint drive by means of the at least two drive units in such a way that merely a horizontal movement of the at least two sealing jaws is generated. Preferably, the movement unit is drivable by the joint drive by means of the at least two drive units in such a way that merely a vertical movement of the at least two sealing jaws is generated. It is also conceivable that the movement unit is drivable by the joint drive by means of the at least two drive units in such a way that simultaneously a horizontal movement and a vertical movement of the at least two sealing jaws is generated.

The movement unit comprises in particular at least one movement element, preferably at least two movement elements, to constitute a movable connection between at least one of the at least two drive units and the at least two sealing jaws. Exemplary, the at least one movement element is implemented as a beam, an arm, a bearing element, in particular a torque resistant linear bushing, a gear wheel or the like. The movement unit comprises at least one drive connection element to connect the at least two drive units mechanically to each other. Exemplary, the drive connection element is implemented as a beam, an arm, a bearing element, in particular a torque resistant linear bushing, a gear wheel or the like. In particular, the drive connection element is connected to the at least two drive units by at least one movement element of the movement unit. Alternatively, it is also conceivable that at least one drive unit of the at least two drive units is directly connected, in particular movably connected, to the drive connection element, preferably free from any additional movement elements. In particular in at least one preferred embodiment, the drive connection element is connected to the at least two sealing jaws via at least one additional movement element of the movement unit, which is preferably non-rotatably connected to the drive connection element. Preferably, the movement unit comprises at least in the preferred embodiment at least two slider elements, which are in particular movably connected to the additional movement element and/or the at least two sealing jaws. Particularly preferable, the drive connection element, the two slider elements and the additional movement element are components of a crank slider mechanism, which is in particular arranged between the at least two movement elements and the at least two sealing jaws. Exemplary, the two slider elements are implemented as arms, beams, bearing elements, or the like. Preferably, the drive connection element is preferably connected to the additional movement element via a rod or the like. It is also conceivable that the additional movement element and the drive connection element are implemented integrally with each other. "Implemented integrally" is in particular to mean connected at least by substance-to-substance bond, for example by a welding process, a gluing process, an injection-molding process, and/or another process that is deemed expedient by someone skilled in the art, and/or advantageously formed in one piece, like for example by a production from a cast and/or by a production in a one-component or multi-component injection-molding procedure, and advantageously from a single blank. The crank slider mechanism is preferably configured to transmit a driving force generatable by the at least two drive units, in particular a movement of the drive connection element, into a horizontal and/or vertical movement of the at least two sealing jaws. Preferably, the drive connection element is merely movable by the joint drive of the at least two drive units. In particular, in a preferred embodiment of the invention the drive connection element can be driven to rotate around a rotation axis of the drive connection element by the joint drive by means of the at least two drive units to generate a horizontal movement of the at least two sealing jaws. Alternatively, it is also conceivable that the drive connection element can be driven to rotate around the rotation axis of the drive connection element by the joint drive by means of the at least two drive units to generate a vertical movement of the at least two sealing jaws. In particular, the rotation axis of the drive connection element runs at least substantially parallel to the sealing surfaces of the at least two sealing jaws. Preferably, the rotation axis of the drive connection element runs at least substantially perpendicularly to the horizontal movement axis of the guide unit and/or to the vertical movement axis of guide unit. Alternatively, it is also conceivable that the rotation axis of the drive connection element runs at least substantially perpendicularly to the sealing plane of the at least two sealing jaws. It is further alternatively also conceivable that the rotation axis of the drive connection element runs at least substantially parallel to the horizontal movement axis of the guide unit or to the vertical movement axis of the guide unit.

In particular, the movement unit is at least substantially completely arranged sideways relative to the at least two sealing jaws, at least viewed in a direction parallel to the horizontal movement axis of the guide unit. By the fact that an object is arranged at least substantially completely sideways relative to a further object is here in particular to be understood that at least 50%, preferably 75% and particularly preferably at least 90% of a total volume and/or a total mass of the object are arranged sideways relative to the further object. Alternatively, it is also conceivable that the movement unit is at least partially, in particular at least substantially completely, arranged behind or in front of the at least two sealing jaws, at least viewed in the direction parallel to the horizontal movement axis of the guide unit. By the fact that an object is arranged at least substantially completely in front of or behind a further object, at least viewed in one direction is here in particular to be understood that at least 50%, preferably 75% and particularly preferably at least 90% of a total volume and/or a total mass of the object are arranged in front of or behind the further object, at least viewed in the direction. Preferably, at least in the preferred embodiment, the movement unit has an analoguous structure on both sides of the at least two sealing jaws. In particular, at least in the preferred embodiment of the invention, the movement unit comprises two drive connection elements, wherein in particular one drive connection element of the two drive connection elements is embodied by the already aforementioned drive connection element. A further drive connection element of the two drive connection elements is preferably embodied identically to the drive connection element. Alternatively, it is also conceivable that the further drive connection element is embodied differently from the drive connection element. The drive connection element and the further drive connection element are preferably arranged on averted sides of the at least two sealing jaws. A connection of the further drive connection element to the at least two sealing jaws is preferably analogous to a connection of the drive connection element to the at least two sealing jaws. In particular, the connection of the further drive connection element to the at least two drive units is analogous to a connection of the drive connection element to the at least two drive units. The movement unit comprises preferably at least two further movement elements, whose connection to the at least two sealing jaws is in particular analogous to a connection of the at least two movement elements to the at least two sealing jaws. A connection of the at least two further movement elements to the further drive connection element is in particular analogous to a connection of the at least two movement elements to the drive connection element. In particular, a connection of the at least two further movement elements to the at least two drive units is analogous to a connection of the at least two movement elements to the at least two drive units. The at least two movement elements and the at least two further movement elements are preferably arranged on averted sides of the at least two sealing jaws. The at least two drive units are arranged in particular sideways relative to the at least two sealing jaws or in a central position relative to the at least two movement elements and the at least two further movement elements, preferably at least viewed in the direction parallel to the horizontal movement axis of the guide unit. Alternatively, it is also conceivable that the at least two drive units are arranged differently, in particular in a way that appears reasonable to a person skilled in the art.

At least one drive unit of the at least two drive units is implemented as an electric motor, as a pneumatic motor or as another drive unit that appears reasonable to a person skilled in the art. In particular, each of the at least two drive units in the preferred embodiment of the invention comprises at least one drive shaft. A drive direction of a drive unit of the at least two drive units preferably corresponds to a direction of rotation of a rotation of the drive shaft around the rotation axis of the drive shaft. In particular the rotation axis of the drive shaft corresponds to a main extension axis of the drive shaft. By a "main extension axis" of an object is herein in particular an axis to be understood which extends parallel to a longest edge of a smallest geometric rectangular cuboid that just still completely encloses the object. The rotation axis of the drive shaft of at least one drive unit of the at least two drive units runs preferably at least substantially parallel to the sealing surfaces of the at least two sealing jaws. Preferably, the rotations axis of the drive shaft of at least one of the at least two drive units runs at least substantially perpendicularly to the horizontal movement axis and/or the vertical movement axis of the guide unit. Alternatively, it is also conceivable that the rotation axis of at least one drive unit of the at least two drive units runs at least substantially perpendicularly to the sealing plane of the at least two sealing jaws. Furthermore, it is alternatively also conceivable that the rotation axis of the drive shaft of at least one of the at least two drive units runs at least substantially parallel to the horizontal movement axis or the vertical movement axis of the guide unit. In particular in the preferred embodiment of the invention, the rotation axes of the drive shafts of the at least two drive units run at least substantially parallel to each other. Alternatively, it is also conceivable that the rotation axes of the drive shafts of the at least two drive units run transversely, preferably at least substantially perpendicularly, relative to each other. The drive shaft of one of the at least two drive units is preferably directly connected to the movement element of the at least two movement elements and/or to a movement element of the at least two further movement elements. A drive shaft of a further drive unit of the at least two drive units is preferably directly connected to the further movement element of the at least two movement elements and/or to one further movement element of the at least two further movement elements.

Preferably, the drive connection element can be driven to move translationally along a translational movement axis of the drive connection element by the joint drive by means of the at least two drive units to generate a vertical movement of the at least two sealing jaws. Alternatively, it is also conceivable that the drive connection element can be driven to move translationally along the translational movement axis of the drive connection element by the joint drive by means of the at least two drive units to generate a horizontal movement of the at least two sealing jaws. The translational movement axis of the drive connection element runs preferably transversely, particularly preferable at least substantially perpendicularly, to the rotation axis of the drive connection element. Alternatively, it is also conceivable that the translational movement axis of the drive connection element runs preferably at least substantially parallel to the rotation axis of the drive connection element. The translational movement axis runs preferably at least substantially parallel to the vertical movement axis of the guide unit. Alternatively, it is also conceivable that the translational movement axis runs transversely, preferably at least substantially perpendicularly, to the vertical movement axis of the guide unit and/or the sealing surfaces of the at least two sealing jaws. In particular, the translational movement axis of the drive connection element runs at least substantially perpendicularly to the horizontal movement axis of the guide unit. Alternatively, it is also conceivable that the translational movement axis of the drive connection element runs at least substantially parallel to the horizontal movement axis of the guide unit. Advantageously a transverse sealing device can be provided that allows for a particularly compact mechanism to generate a horizontal and a vertical movement of the at least two sealing jaws. Advantageously a particularly space-saving transverse sealing device can be provided. Advantageously a transverse sealing device can be provided, which enables a horizontal movement and/or a vertical movement of the at least two sealing jaws to be generated in a structurally simple manner.

It is further proposed that a vertical movement of the at least two sealing jaws is generatable by a parallel drive of the movement unit by means of the at least two drive units. In particular, a vertical movement of the at least two sealing jaws is generatable by a parallel drive of the drive connection element by means of the at least two drive units. In particular, a parallel drive of the drive connection element by the at least two drive units should be understood to mean that the movements transmitted to the drive connection element, which are generatable by the at least two drive units, coincide at least in a direction and in a velocity. The components of the crank slider mechanism are, by a parallel drive of the movement unit by means of the at least two drive units, in particular at least in the preferred embodiment, moved merely translationally as a whole to generate a vertical movement of the at least two sealing jaws. It is conceivable that a parallel drive of the movement unit, in particular the drive connection element, is generatable by a synchronous or an asynchronous operation of the at least two drive units. In a preferred embodiment, drive directions of the at least two drive units to generate a parallel drive of the movement unit, in particular the drive connection element, are opposite to each other or are at least differ from each other. In particular, the drive directions of the at least two drive units depend on the arrangement of the at least two drive units relative to each other and/or the arrangement of the movement unit. Alternatively, it is also conceivable that the drive directions of the at least two drive units coincide to generate a parallel drive of the movement unit, in particular the drive connection element. In the preferred embodiment, the movement unit is arranged in such a way that a parallel drive of the movement unit, in particular the drive connection element, generates a translationally movement of the drive connection element along the translational movement axis of the drive connection element, preferably to generate a vertical movement of the at least two sealing jaws. It is conceivable that absolute values of drive speeds of the at least two drive units coincide or differ from each other to generate a parallel drive of the movement unit, in particular the drive connection element, preferably depending on the arrangement of the at least two drive units relative to each other and/or the arrangement of the movement unit. Advantageously the at least two sealing jaws can be moved particularly flexible and precisly by the joint drive of two drive units.

Furthermore, it is proposed that a horizontal movement of the at least two sealing jaws relative to each other is generatable by a non-parallel drive of the movement unit by means of the at least two drive units. In particular, a non-parallel drive of the drive connection element by the at least two drive units should be understood to mean that the movements transmitted to the drive connection element, which are generatable by the at least two drive units, differ at least in a direction. The directions of the movement, in particular generatable by means of the at least two drive units, that are transmitted to the drive connection element in the case of a non-parallel drive of the drive connection element are preferably opposite to one another. The crank slider mechanism is in particular at least in the preferred embodiment connected to the at least two drive units in such a way that by a non-parallel drive of the movement unit by means of the at least two drive units, the crank slider mechanism is executed to generate a horizontal movement of the at least two sealing jaws. In particular, a horizontal movement of the at least two sealing jaws is generatable by a non-parallel drive of the drive connection element by means of the at least two drive units. It is conceivable that a non-parallel drive of the movement unit, in particular of the drive connection element, is generatable by an asynchronous operation of the at least two drive units. In particular in the preferred embodiment of the invention, the drive directions of the at least two drive units to generate a non-parallel drive of the movement unit, preferably the drive connection element, coincide. Alternatively, it is also conceivable that the drive directions of the at least two drive units differ from each other, preferably are opposite to each other, to generate a non-parallel drive of the movement unit, in particular the drive connection element. Preferably at least in the preferred embodiment, the movement unit is arranged in such a way that a non-parallel drive of the movement unit, in particular the drive connection element, generates a rotational movement of the drive connection element around the rotation axis of the drive connection element, in particular to generate a horizontal movement of the at least two sealing jaws. It is conceivable that the absolute values of the drive speeds of the at least two drive units coincide or differ from each other to generate a parallel drive of the movement unit, in particular the drive connection element, preferably depending on the arrangement of the at least two drive units relative to each other and/or the arrangement of the movement unit. Advantageously the at least two sealing jaws can be moved particularly flexible and precisly by the joint drive of two drive units.

Beyond that it is proposed that the movement unit comprises at least two, in particular the already aforementioned two, movably connected movement elements, wherein one drive unit of the at least two drive units is mechanically connected to one, in particular the already aforementioned, movement element of the at least two movement elements to drive the movement element and a, in particular the already aforementioned, further drive unit of the at least two drive units is mechanically connected to a further movement element of the at least two movement elements to drive the further movement element. Preferably the at least two movement elements are movably, in particular linearly movably and/or rotatably, connected to each other via the drive connection element. The movement element is preferably movably connected to the drive shaft of the drive unit, in particular to a link arm of the drive unit, which is preferably arranged on the drive shaft of the drive unit in a fixed position relative to the drive shaft. The further movement element and the movement element are preferably embodied identically. It is alternatively also conceivable that the further movement element is embodied differently from the movement element. The further movement element is in particular movably, preferably linearly movably and/or rotatably, connected to the drive shaft of the further drive unit, in particular to a link arm of the further drive unit, which is preferably arranged on the drive shaft of the further drive unit in a fixed position. Advantageously the at least two sealing jaws can be moved particularly flexible and precisely by the joint drive of two drive units. Advantageously the at least two drive units can be arranged at least substantially statically relative to the frame. A particularly advantageous dynamic behaviour of a transverse sealing device can be achieved.

It is further proposed that, preferably at least in one embodiment of the invention, the transverse sealing device comprises at least four drive units to drive the movement unit, wherein the movement unit comprises at least four movement elements, wherein each of the four drive units is mechanically connected to one of the four movement elements to drive the four movement elements to generate a vertical and/or horizontal movement of the at least two sealing jaws. Preferably the at least four movement elements correspond to the at least two movement elements and the at least two further movement elements. Preferably, the movement element of the at least two movement elements and the movement element of the at least two further movement elements are free from any direct connection, in particular via a drive shaft, or the like. In particular in a preferred embodiment, the movement unit is constituted by the four movement elements, two rods, wherein in particular one of the two rods is embodied by the already aforementioned rod, the drive connection element, the further drive connection element, four slider elements, wherein two of the four slider elements are embodied by the already aforementioned two slider elements and two additional movement elements, wherein one of the two additional movement elements is embodied by the already aforementioned additional movement element. Alternatively, it is also conceivable that the movement unit is constituted merely by the drive connection element, the rod, the two movement elements, the two slider elements and the additional movement element. Furthermore, other embodiments of the movement unit are conceivable that seem to be reasonable for a person skilled in the art. In particular it is conceivable that the movement unit is free from any rods, preferably at least free from the rod. Advantageously a particularly compact transverse sealing device can be provided.

It is further proposed that the transverse sealing device comprises a, in particular the already aforementioned, frame to which the at least two drive units to drive the movement unit to generate a vertical and/or horizontal movement of the at least two sealing jaws are arranged at least substantially statically. In particular, "at least substantially statically" means free from any movement other than a movement of mechanical components of the at least two drive units which inevitably move during operation of the at least two drive units. A transverse sealing device with particularly advantageous dynamic behavior regarding a movement of the at least two sealing jaws can be made available.

Moreover, the invention is based on a method for operating the transverse sealing device according to the invention, wherein in one process step at least two sealing jaws of the transverse sealing device are moved translationally along a horizontal movement axis and/or a vertical movement axis of the guide unit of the transverse sealing device by the joint drive of a movement unit of the transverse sealing device by means of at least two drive units of the transverse sealing device. According to the invention a horizontal movement or a vertical movement of the at least two sealing jaws is only generated by a drive by all of the at least two drive units. Preferably, the horizontal movement and/or the vertical movement of the at least two sealing jaws are generated by a drive by all of the at least two drive units. In particular, in one process step a power generated by the at least two drive units is transmitted by means of the movement unit to the at least two sealing jaws to generate a horizontal movement of the at least two sealing jaws relative to each other and/or to generate a vertical movement of the at least two sealing jaws. It is conceivable that in one process step the movement unit is driven by the joint drive by means of the at least two drive units in such a way that merely a horizontal movement or a vertical movement of the at least two sealing jaws is generated. Preferably in one process step the drive connection element is driven to rotate around the rotation axis of the drive connection element by the joint drive by means of the at least two drive units to generate a horizontal movement of the at least two sealing jaws. Alternatively, it is also conceivable that in one process step the drive connection element is driven to rotate around the rotation axis of the drive connection element by the joint drive by means of the at least two drive units to generate a vertical movement of the at least two sealing jaws. Preferably, in one process step the drive connection element is driven to move translationally along the translational movement axis of the drive connection element by the joint drive by means of the at least two drive units to generate a vertical movement of the at least two sealing jaws. Alternatively, it is also conceivable that in one process step the drive connection element is driven to move translationally along the translational movement axis of the drive connection element by the joint drive by means of the at least two drive units to generate a horizontal movement of the at least two sealing jaws. Preferably in one process step a driving force generated by the at least two drive units, in particular a movement of the drive connection element, is transmitted by the crank slider mechanism into a horizontal and/or vertical movement of the at least two sealing jaws. Advantageously the two sealing jaws can be moved horizontally and/or vertically

in a particularly space-saving and structurally simple manner.

Furthermore, it is proposed that in one process step the movement unit, in particular at least, preferably the already aforementioned, two movement elements of the movement unit, is driven in parallel by the at least two drive units to generate a vertical movement of the at least two sealing jaws. In particular, in one process step the vertical movement of the at least two sealing jaws is generated by a parallel drive of the drive connection element by means of the at least two drive units. It is conceivable that a parallel drive of the movement unit, in particular the drive connection element, is generated by a synchronous or an asynchronous operation of the at least two drive units. Advantageously the at least two sealing jaws can be moved particularly flexible and precisely by the joint drive of two drive units.

Beyond that it is proposed that in one process step the movement unit, in particular at least, preferably the already aforementioned, two movement elements of the movement unit, is driven in opposite directions by the at least two drive units to generate a horizontal movement of the at least two sealing jaws. In particular, in one process step a horizontal movement of the at least two sealing jaws is generated by a non-parallel drive of the drive connection element by means of the at least two drive units. It is conceivable that in one process step a non-parallel drive of the at least two sealing jaws is generated by a synchronous or an asynchronous operation of the at least two drive units. Advantageously the at least two sealing jaws can be moved particularly flexible and precisely by the joint drive of two drive units.

The invention furthermore proposes a vertical form fill sealing machine comprising at least a machine frame and at least the transverse sealing device according to the invention. The vertical form fill sealing machine comprises preferably at least one supply station having means for holding a roll of packaging material. In particular, the form fill sealing machine comprises a form shoulder or the like for transforming the packaging material into a tube. Preferably the form fill sealing machine comprises a vertical sealing device for sealing the packaging material vertically. In particular the form fill sealing machine comprises at least one filling station to fill the packaging material with a material. The filling station, the supply station, the transverse sealing device and/or the vertical sealing device are/is in particular attached to the machine frame of the form fill sealing machine. Advantageously, a vertical form fill sealing machine with a structurally simple movement mechanism for moving the at least two sealing jaws of the transverse sealing device can be provided.

The vertical form fill sealing machine according to the invention and/or the method according to the invention shall herein not be limited to the application and implementation described above. In particular, in order to fulfill a functionality that is described here, the vertical form fill sealing machine according to the invention and/or the method according to the invention may comprise a number of individual elements, components and units as well as method steps that differs from a number given here. Moreover, concerning the value ranges given in the present disclosure, values within the limits mentioned shall also be considered to be disclosed and to be usable as applicable.

### Drawing

Further advantages will become apparent from the following description of the drawing. In the drawing seven exemplary embodiments of the invention are illustrated. The drawing, the description and the claims contain a plurality of features in combination. Someone skilled in the art will purposefully also consider the features individually and will find further expedient combinations.

It is shown in:
- Fig. 1: A section of a vertical form fill sealing machine according to the invention with a transverse sealing device according to the invention, in a schematic representation,
- Fig. 2: A section of the vertical form fill sealing machine according to the invention, in another schematic representation,
- Fig. 3: the transverse sealing device according to the invention, in a detailed schematic representation,
- Fig. 4: a schematic flow chart of a method for operating the transverse sealing device according to the invention,
- Fig. 5a: a movement diagram for a vertical movement of at least two sealing jaws of the transverse sealing device according to the invention,
- Fig. 5b: a movement diagram for a horizontal movement of the at least two sealing jaws of the transverse sealing device according to the invention, and
- Fig. 6: a transverse sealing device according to the invention in analternative embodiment.

### Description of the exemplary embodiments

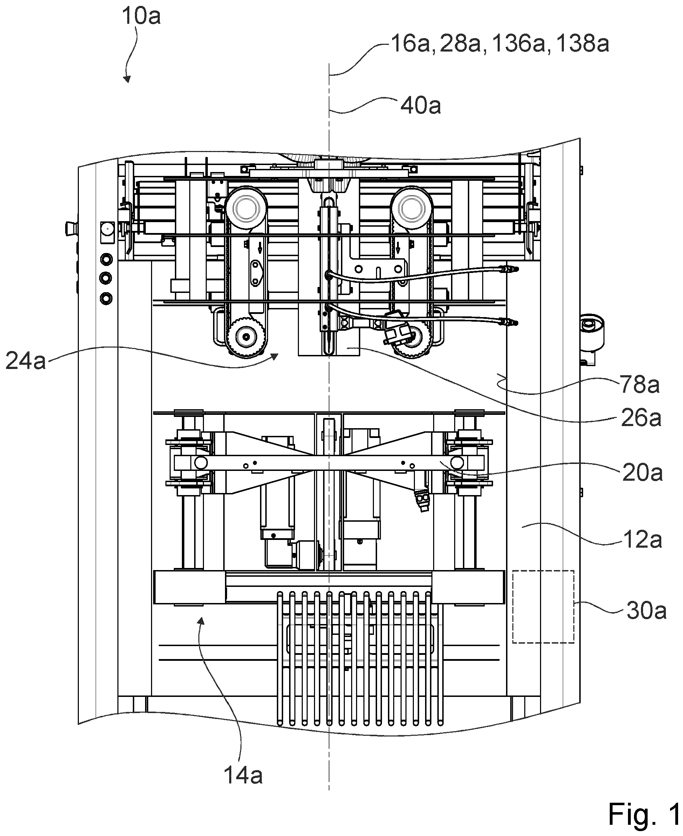

In figure 1 a vertical form fill sealing machine 10a is shown. The vertical form fill sealing machine 10a comprises a machine frame 12a. The vertical form fill sealing machine 10a comprises at least one transverse sealing device 14a for a transverse sealing of a packaging material. The vertical form fill sealing machine 10a comprises at least one supply station (not shown here) having components configured for holding a roll of packaging material. The vertical form fill sealing machine comprises a form shoulder (not shown here) for transforming the packaging material into a tube. The vertical form fill sealing machine comprises a longitudinal sealing device (not shown here) for a longitudinal sealing of the packaging material. The vertical form fill sealing machine 10a comprises a filling station 24a. The filling station 24a comprises at least one filling tube 26a that is configured to fill a package with content. The filing station 24a, the supply station, the transverse sealing device 14a and/or the longitudinal sealing device are attached to the machine frame 12a of the vertical form fill sealing machine 10a.

The transverse sealing device 14a is mounted on the machine frame 12a so that it can be rotated around a rotation axis 16a of the transverse sealing device 14a at least substantially as a whole. At least substantially all components of the transverse sealing device 14a are simultaneously rotatable around the rotation axis 16a of the transverse sealing device 14a, in particular relative to the machine frame 12a. The transverse sealing device 14a comprises a frame 70a. All components of the transverse sealing device 14a other than the frame 70a are mounted on the frame 70a of the transverse sealing device 14a. The frame 70a of the transverse sealing device 14a is arranged movably, preferably rotatably, on the machine frame 12a.

The transverse sealing device 14a is mounted movably, in particular rotatably, on the machine frame 12a in such a way that the rotation axis 16a of the transverse sealing device 14a is positionally fixed relative to the machine frame 12a, in particular independently from any operational movements of the transverse sealing device 14a relative to the machine frame 12a. The transverse sealing device 14a is mounted on the machine frame 12a in such a way that the transverse sealing device 14a is only movable at least substantially as a whole by a rotation of the transverse sealing device 14a substantially as a whole around the rotation axis 16a of the transverse sealing device 14a. A rotation of the transverse sealing device 14a substantially as a whole relative to the machine frame 12a is generatable free from any translational movements of the transverse sealing device 14a at least substantially as a whole, in particular relative to the machine frame 12a. The transverse sealing device 14a is mounted on the machine frame 12a in such a way that the transverse sealing device 14a, substantially as a whole, has only one degree of freedom to move. Alternatively, it is also conceivable that the transverse sealing device 14a is mounted on the machine frame 12a in such a way that the transverse sealing device 14a can be moved translationally, in particular along a direction parallel to a translational movement axis of a guide unit 82a of the transverse sealing device 14a, in particular relative to the machine frame 12a. The rotation axis 16a of the transverse sealing device 14a runs at least substantially perpendicularly to a support surface of the machine frame 12a. The support surface of the machine frame 12a is configured to transmit weight forces of the vertical form fill sealing machine 10a, in particular the machine frame 12a, to a floor, on which the vertical form fill sealing machine 10a is arranged. The support surface of the machine frame 12a is in particular part of a stand of the machine frame 12a, of a bottom surface of the machine frame 12a or the like.

The transverse sealing device 14a is positionable in at least two work positions for a transverse sealing of a packaging material by means of a stepless rotation of the transverse sealing device 14a relative to the machine frame 12a around the rotation axis 16a. Preferably the stepless rotation of the transverse sealing device 14a, at least substantially as a whole, relative to the machine frame 12a around the rotation axis 16a is a pure rotation, particularly preferably free from any translational movements of the transverse sealing device 14a relative to the machine frame 12a, in particular from one work position of the at least two work positions to a further work position of the at least two work positions. The transverse sealing device 14a is mounted on the machine frame 12a in such a way that the transverse sealing device 14a can be positioned in at least two work positions for a transverse sealing of a packaging material free of any translational movement of the transverse sealing device 14a at least substantially as a whole, in particular relative to the machine frame 12a. The transverse sealing device 14a is positionable in the at least two work positions for a transverse sealing of a packaging material solely by means of the rotation of the transverse sealing device 14a, at least substantially as a whole, relative to the machine frame 12a, in particular free from any additional, especially linearly guided, movements of the transverse sealing device 14a at least substantially as a whole relative to the machine frame 12a. The at least two work positions of the transverse sealing device 14a differ in a rotational position of the transverse sealing device 14a, in particular at least substantially as a whole, relative to the machine frame 12a. The at least two work positions of the transverse sealing device 14a differ from each other by an angle of 90°. Alternatively, it is also conceivable that the at least two work positions of the transverse sealing device 14a differ from each other by an angle different from 90°, preferably by an angle greater than 0° and less than 360°. It is also conceivable that the transverse sealing device 14a can be rotated over 360°, in particular by an integer or a non-integer multiple of 360°, relative to the machine frame 12a. It is conceivable that energy supply lines of the vertical form fill sealing machine 10a for supplying the transverse sealing device 14a with energy are implemented and/or arranged relative to the machine frame 12a and/or the transverse sealing device 14a such as to enable a 360° rotation, preferably a rotation over 360°, in particular a rotation by an integer or a non-integer multiple of 360°, of the transverse sealing device 14a relative to the machine frame 12a. Exemplarily the energy supply lines are arranged in combination with a slip ring, a rotary transformer or the like of the vertical form fill sealing machine 10a such as to enable a 360° rotation of the transverse sealing device 14a relative to the machine frame 12a. It is conceivable that the transverse sealing device 14a is infinitely rotatable at least substantially as a whole around the rotation axis 16a in a variety of different work positions for a transverse sealing of a packaging material. Alternatively, it is also conceivable that the transverse sealing device 14a is rotatable at least substantially as a whole around the rotation axis 16a of the transverse sealing device 14a into fixed, in particular spaced-apart, rotational positions of the transverse sealing device 14a relative to the machine frame 12a, which in particular constitute different work positions of the transverse sealing device 14a.

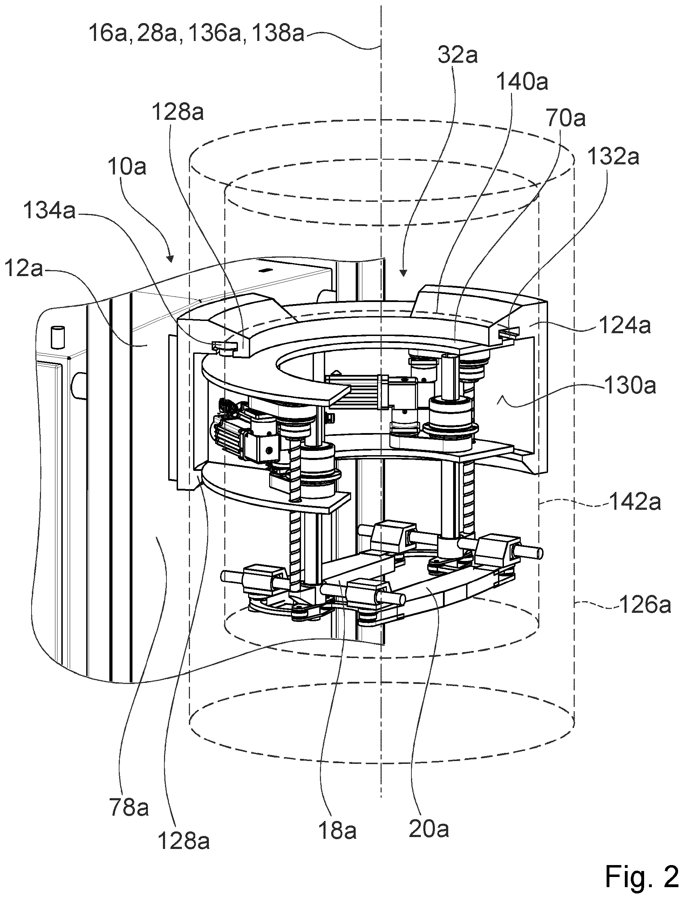

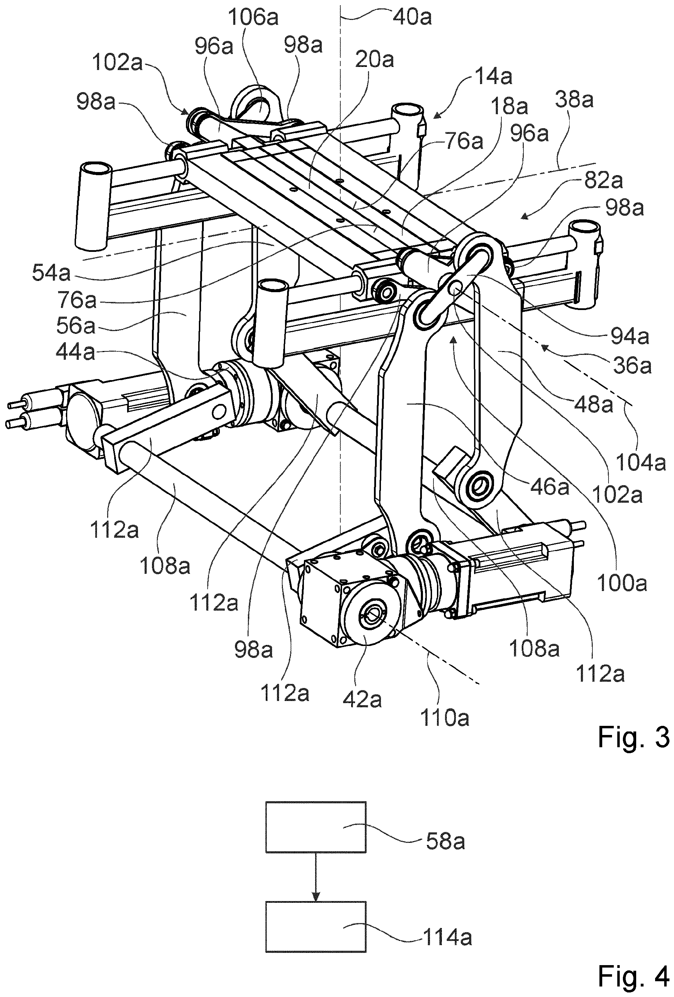

Figure 2 shows a schematic structure of the transverse sealing device that is at least partially different form an actual implementation of the transverse sealing device 14a, which is shown in Figure 3. However, Figure 2 illustrates the interaction of a guide unit 32a of the vertical form fill sealing machine 10a with the transverse sealing device 14a. The guide unit 32a of the vertical form fill sealing machine 10a is intended to guide the rotation of the transverse sealing device 14a around the rotation axis 16a at least substantially as a whole. The guide unit 32a comprises at least one guide element 124a. The at least one guide element 124a delimits at least partially an at least substantially circular cylindrical receiving area 126a within which the transverse sealing device 14a is at least substantially completely arranged. The term "substantially completely" is here in particular to mean at least 50%, preferably 75% and particularly preferably at least 90% of a total volume of an object, preferably of a total volume of a circular cylinder that just completely encloses the object, and/or a total mass of the object, in particular of the transverse sealing device. The guide unit 32a is at least partially arranged on the machine frame 12a.

The at least one guide element 124a is arranged on the machine frame 12a. The at least one guide element 124a is implemented integrally with the machine frame 12a. "Implemented integrally" is in particular to mean connected at least by substance-to-substance bond, for example by a welding process, a gluing process, an injection-molding process, and/or another process that is deemed expedient by someone skilled in the art, and/or advantageously formed in one piece, like for example by a production from a cast and/or by a production in a one-component or multi-component injection-molding procedure, and advantageously from a single blank. Alternatively, it is also conceivable that the guide element 124a is arranged in a detachable, in particular a non-destructive, manner on the machine frame 12a. The at least one guide element 124a is circle-shaped, at least viewed in a direction parallel to the rotation axis 16a of the transverse sealing device 14a. The at least one guide element 124a has an annulus-form, particularly preferable an annulus-segment-form, at least viewed in the direction parallel to the rotation axis 16a of the transverse sealing device 14a. The at least one guide element 124a has a hollow-cylinder form, wherein the guide element 124a has at each end of the hollow-cylinder-formed guide element 124a a protrusion 128a, in particular on an inside wall 130a of the guide element 124a. The inside wall 130a is circular-cylinder-shaped, in particular except from the protrusions 128a. At least part of the transverse sealing device 14a is arranged between the protrusions 128a of the guide element 124a, preferably in contact with the protrusions 128a. The at least one guide element 124a has a guide groove 132a. The guide groove 132a is arranged on one of the protrusions 132a of the guide element 124a. Alternatively or additionally, it is also conceivable that the guide element 124a has at least one guide knob, at least one guide stud or the like. Furthermore, it is also conceivable alternatively that the guide element 124a is implemented as a guide rail, a guide groove, a guide knob, a guide stud or the like. Alternatively, it is also conceivable that the guide unit 32a of the vertical form fill sealing machine 10a comprises a plurality of guide elements 124a, which are arranged in a circular manner. The guide groove 132a has an undercut. Alternatively it is also conceivable, that the guide groove 132a of the guide element 124a is implemented free from an undercut.

It is conceivable that the at least one guide element 124a has a plurality of snap-in points, in particular spaced-apart from each other, along a guide direction of the at least one guide element 124a, wherein the transverse sealing device 14a can be snapped in at the snap-in points. Alternatively, it is also conceivable that the at least one guide element 124a is free from any snap-in points. Preferably, the transverse sealing device 14a can be fixed steplessly along the at least one guide element 124a, e.g. via a clamping connection or the like. The at least one guide element 124a is arranged on an inner wall 78a of the machine frame 12a. The at least one guide element is implemented integrally with the inner wall 78a of the machine frame 12a. Alternatively it is also conceivable, that the at least one guide element 124a of the guide unit 32a of the vertical form fill sealing machine 10a is arranged detachably on the inner wall 78a of the machine frame 12a, in particular in a non-destructive manner. The inner wall 78a of the machine frame 12a is arranged on a side of the machine frame 12a that faces towards the transverse sealing device 14a. The inner wall 78a is plane. Alternatively, it is also conceivable that the inner wall 78a is at least partially circular cylindrical shaped or has a polygonal shape, at least viewed in the direction parallel to the rotation axis 16a.

The guide unit 32a comprises at least one further guide element 134a, which is arranged on the transverse sealing device 14a. The at least one further guide element 134a is implemented as a guide knob. The at least one further guide element 134a is implemented in such a way, that the further guide element 134a engages in the undercut of the guide groove 132a. Alternatively it is also conceivable that the at least one further guide element 134a is implemented as a guide rail, a guide groove, a guide stud or the like. It is also conceivable that the guide unit 32a of the vertical form fill sealing machine 10a comprises a plurality of further guide elements 134a, which are arranged on the transverse sealing device 14a. The at least one further guide element 134a is implemented correspondingly to the at least one guide element 124a. The at least one further guide element 134a is arranged on a bottom side or a top side of the transverse sealing device 14a, at least viewed in the direction parallel to the rotation axis 16a. Alternatively it is also conceivable that the at least one further guide element 134a is arranged laterally to the transverse sealing device 14a, at least viewed in the direction parallel to the rotation axis 16a. The at least one further guide element 134a is implemented integrally with the transverse sealing device 14a. Alternatively it is also conceivable, that the at least one further guide element 134a of the guide unit 32a of the vertical form fill sealing machine 10a is arranged detachably on the transverse sealing device 14a, in particular in a non-destructive manner.

It is conceivable that the guide unit 32a and/or the machine frame 12a have/has one or more bearing points, in which the transverse sealing device 14a, in particular the frame 70a of the transverse sealing device 14a, is movably connected to the guide unit 32a and/or to the machine frame 12a. At least one bearing point is arranged on the bottom side or the top side of the transverse sealing device 14a, at least viewed in the direction parallel to the rotation axis 16a, preferably on at least one of the protrusions 128a of the guide element 124a. It is also conceivable alternatively that at least one bearing point is located laterally to the transverse sealing device 124a. Alternatively or additionally, at least one bearing point is located centrally relative to the transverse sealing device 14a on the bottom side or the top side of the transverse sealing device 14a, at least viewed in the direction parallel to the rotation axis 16a, in particular in such a way that the rotation axis 16a of the transverse sealing device 14a goes through the at least one bearing point.

The circular cylindrical shaped receiving area 126a is at least partially delimited by the inside wall 130a of the guide element 124a. The protrusions 128a of the guide element 124a protrude into the cylindrical shaped receiving area 126a. A curvature, in particular a curvature radius of the curvature, of the at least one guide element 124a, in particular of the inside wall 130a of the guide element 124a, is equivalent to a curvature, in particular a curvature radius of the curvature, of the at least substantially circular cylindrical receiving area 126a. The at least substantially circular cylindrical receiving area 126a is encompassed along a circumferential direction of the at least substantially circular cylindrical receiving area 126a by the at least one guide element 124a, in particular the inside wall 130a of the guide element 124a, by at least 75°, preferably by at least 90 °. The circumferential direction of the at least substantially circular cylindrical receiving area 126a runs in a plane which is perpendicular to a main extension axis 136a of the at least substantially circular cylindrical receiving area 126a. By a "main extension axis" of an object or an area is herein in particular an axis to be understood which extends parallel to a longest edge of a smallest geometric rectangular cuboid that just still completely encloses the object or the area respectively. It is also conceivable alternatively, that the at least substantially circular cylindrical receiving area 126a is encompassed by the at least one guide element 124a, in particular the inside wall 130a of the guide element 124a, along the circumferential direction of the at least substantially circular cylindrical receiving area 126a by at least 135° and preferably by at least 180°. Alternatively, it is also conceivable, that the at least substantially circular cylindrical receiving area 126a is encompassed by the at least one guide element 124a, in particular the inside wall 130a of the at least one guide element 124a, along the circumferential direction of the at least substantially circular cylindrical receiving area 126a by the at least one guide element 124a by less than 75°.

The main extension axis 136a of the at least substantially circular cylindrical receiving area 124a is arranged within a proximity area of the rotations axis 16a of the transverse sealing device 14a. The proximity area of the rotation axis 16a of the transverse sealing device 14a has a maximum extension starting from the rotation axis 16a of the transverse sealing device 14a, which is in particular oriented perpendicularly to the rotation axis of the transverse sealing device, whose value is maximally 20 %, particularly preferable maximally 10 %, of a value of a maximum transverse extent of the transverse sealing device 14a. The maximum transverse extent of the transverse sealing device 14a is oriented at least substantially perpendicularly to the vertical movement axis 40a of the guide unit 82a of the transverse sealing device 14a and/or to the rotation axis 16a of the transverse sealing device 14a. The main extension axis 136a of the at least substantially circular cylindrical receiving area 124a is equivalent to the rotation axis 16a of the transverse sealing device 14a.

The transverse sealing device 14a comprises at least two sealing jaws 18a, 20a. The main extension axis 136a of the at least substantially circular cylindrical receiving area 124a is located in a proximity area of a sealing plane of the at least two sealing jaws 18a, 20a. The rotation axis 16a is located in the sealing plane of the at least two sealing jaws 18a, 20a. Each of the at least two sealing jaws 18a, 20a has a sealing surface 76a. The sealing surfaces 76a of the at least two sealing jaws 18a, 20a are arranged facing each other. The sealing surfaces 76a of the at least two sealing jaws 18a, 20a are in contact with the packaging material in the sealing position in order to create a sealing in the packaging material. The sealing surfaces 76a of the at least two sealing jaws 18a, 20a run at least substantially parallel to each other. The sealing plane of the at least two sealing jaws 18a, 20a is in particular defined by sealing surfaces 76a of the at least two sealing jaws 18a, 20a in a position in which the sealing surfaces 76a of the at least two sealing jaws 18a, 20a are directly adjacent to each other, preferably in contact with each other. The proximity area of the sealing plane has a maximum extension starting from the sealing plane, which is in particular oriented perpendicularly to the sealing plane, whose value is maximally 20 %, particularly preferably maximally 10 %, of a value of the maximum transverse extent of the transverse sealing device 14a. The main extension axis 136a of the at least substantially circular cylindrical receiving area 124a is located in the sealing plane of the at least two sealing jaws 18a, 20a. The rotation axis 16a of the transverse sealing device 14a intersects with a proximity area of a center point of the at least two sealing jaws 18a, 20a relative to the sealing surfaces 76a of the at least two sealing jaws 18a, 20a or goes through the center point of the sealing area of the sealing surfaces 76a of the at least two sealing jaws 18a, 20a. The proximity area of the center point preferably has a maximum extension starting from the center point, whose value is maximally 20 % of a value of a maximum transverse extent of the transverse sealing device 14a. In particular, the maximum transverse extent of the transverse sealing device runs 14a at least substantially perpendicularly to the vertical movement axis 40a of the guide unit 82a and/or to the sealing surfaces 76a of the at least two sealing jaws 18a, 20a.

The transverse sealing device 14a has a central axis 138a, which in particular intersects a center point of the transverse sealing device 14a. The main extension axis 136a of the at least substantially circular cylindrical receiving area 124a is arranged in a proximity area of the central axis 138a of the transverse sealing device 14a. The center point of the transverse sealing device 14a is the geometric center of the transverse sealing device 14a. The central axis 138a of the transverse sealing device 14a is equivalent to a main extension axis of the transverse sealing device 14a. The central axis 138a of the transverse sealing device 14a is equivalent to the rotation axis 16a of the transverse sealing device 14a. Alternatively, it is also conceivable that the central axis 138a of the transverse sealing device 14a is different from the rotation axis 16a of the transverse sealing device 14a. The proximity area of the central axis 138a of the transverse sealing device 14a has a maximum extension starting from the central axis 138a of the transverse sealing device 14a, which is in particular oriented perpendicularly to the central axis 138a of the transverse sealing device 14a, whose value is maximally 20 %, particularly preferably maximally 10 %, of a value of a maximum transverse extent of the transverse sealing device 14a.

The guide element 124a of the guide unit 32a of the vertical form fill sealing machine 10a defines a circle-shaped guideway 140a, wherein the transverse sealing device 14a is arranged at least substantially completely within a circular cylinder 142a corresponding to the circle-shaped guideway 140a. The circular cylinder 142a corresponding to the circle-shaped guideway 140a differs, especially in a radius, from the circular cylindrical receiving area 126a. The circle shaped guideway 140a is defined by the guide groove 132a of the guide element 124a. Alternatively it is also conceivable that the circular cylinder 142a corresponding to the circle-shaped guideway 140a is equivalent to the circular cylindrical receiving area 126a. In particular it is conceivable alternatively, that the circular cylindrical shaped receiving area 126a is at least partially delimited by the circle-shaped guideway 140a of the guide element 124a.

The transverse sealing device 14a has at least partially a circle-shaped outside contour, at least viewed in a direction parallel to the rotation axis 16a. The outside contour 16a of the transverse sealing device 14a constitutes a full circle, at least viewed in the direction parallel to the rotation axis 16a. A curvature, preferably at least a curvature radius of the curvature, of the at least partially circle-shaped outside contour is equivalent to the curvature, preferably the radius of the curvature, of the at least one guide element 124a, in particular the inside wall 130a of the guide element 124a, preferably at least viewed in the direction parallel to the rotation axis 16a. The at least partially circle-shaped outside contour is arranged on a side of the transverse sealing device 14a that faces the machine frame 12a, in particular the inner wall 78a of the machine frame 12a. The frame 70a of the transverse sealing device 14a constitutes the at least partially circle-shaped outside contour of the transverse sealing device 14a. Alternatively, it is also conceivable, that at least one of the at least two sealing jaws 18a, 20a or another component of the transverse sealing device 14a constitute/s the at least partially circle-shaped outside contour of the transverse sealing device 14a. It is also conceivable, that the transverse sealing device 14a has a circular cylindrical outside wall.

The guide element 124a, in particular the inside wall 130a of the guide element 124a, encompasses the transverse sealing device 14a in at least one rotational position of the transverse sealing device 14a relative to the guide element 124a by at least 75° along a circumferential direction of the transverse sealing device 14a. The circumferential direction of the transverse sealing device 14a runs in a plane which is perpendicular to the rotation axis 16a of the transverse sealing device 14a. Alternatively, it is conceivable that the guide element 124a, in particular the inside wall 130a of the guide element 124a encompasses the transverse sealing device 14a in at least one further rotational position of the transverse sealing device 14a relative to the guide element 124a, by less than 75° along the circumferential direction of the transverse sealing device 14a. Preferably, the at least one guide element 124a encompasses the transverse sealing device 14a in the at least one rotational position of the transverse sealing device 14a relative to the guide element 124a, by at least 90°. It is also conceivable that the at least one guide element 124a encompasses the transverse sealing device 14a in the at least one rotational position of the transverse sealing device 14a relative to the guide element 124a by at least 180° and particularly preferably by 360° along the circumferential direction of the transverse sealing device 14a.

The main extension axis 136a of the at least substantially circular cylindrical receiving area 126a is arranged within a proximity area of a central axis 28a of the filling tube 26a, and is in particular equivalent to the central axis 28a of the filling tube 26a. The rotation axis 16a of the transverse sealing device 14a is arranged within the proximity area of the central axis 28a of the filling tube 26a, and is in particular equivalent to the central axis 28a of the filling tube 26a. The central axis 28a of the filling tube 26a is equivalent to a main output axis of the filling tube 26a. It is also conceivable that the central axis 28a of the filling tube 26a is equivalent to a main extension axis of the filling tube. The proximity area of the central axis 28a of the filling tube 26a has a maximum extension starting from the central axis 28a of the filling tube 26a, in particular running perpendicularly to the central axis 28a of the filling tube 26a, whose value is maximally 20 %, particularly preferably maximally 10 %, of a value of the maximum transverse extent of the transverse sealing device 14a. The central axis 28a of the filling tube 26a runs at least substantially parallel to the rotation axis 16a of the transverse sealing device 14a and/or the main extension axis 136a of the at least substantially circular cylindrical receiving area 126a. The filling station 24a is arranged in such a way that the vertical movement axis 40a of the guide unit 82a, intersects with the filling station 24a. The central axis 28a of the filling tube 24a runs at least substantially parallel to the vertical movement axis 40a of the guide unit 82a, and/or the sealing surfaces 76a of the at least two sealing jaws 18a, 20a.

The vertical form fill sealing machine 10a comprises a drive unit 30a to drive the movement unit so as to generate a rotation of the transverse sealing device 14a at least substantially as a whole around the rotation axis 16a. Exemplarily, the drive unit 30a of the vertical form fill sealing machine 10a is implemented as an electromotor, as a pneumatic motor or as another drive unit that appears reasonable to a person skilled in the art. The vertical form fill sealing machine 10a comprises a control unit (not shown here) to control a drive of the drive unit 30a of the vertical form fill sealing machine 10a. The control unit comprises at least a processor and a storage element as well as an operation program stored on the storage element. The storage element is preferably implemented as a digital storage element, for example as a hard disk or the like. The control unit controls the drive of the drive unit 30a of the vertical form fill sealing machine 10a automatically, in particular depending on a running operation program of the control unit. Alternatively or additionally, it is conceivable that the vertical form fill sealing device 10a comprises an input unit (not shown here) to manually control the drive unit 30a of the vertical form fill sealing machine 10a for rotating the transverse sealing device 14a at least substantially as a whole around the rotation axis 16a. Exemplarily, the input unit comprises a keyboard, a touchscreen, buttons, an adjustment wheel or the like. It is conceivable that the input unit is attached to the machine frame 12a or is part of an external unit such as a server, a smartphone, a laptop, a remote control or the like, which in particular has a data connection to the control unit of the vertical form fill sealing machine 10a. Furthermore, it is additionally or alternatively also conceivable that the vertical form fill sealing machine 10a comprises at least one mechanical control element which is intended to be operated manually by a user. Exemplarily, the at least one mechanical control element is implemented as a lever, as a mechanical adjustment wheel or the like. The transverse sealing device 10a is rotatable at least substantially as a whole by means of the drive unit 30a of the vertical form fill sealing machine 10a and/or manually by means of the at least one mechanical control element during operation of the vertical form fill sealing 10a machine, in particular during sealing of the packaging material and/or filling of packages. Additionally or alternatively, it is also conceivable that the transverse sealing device 14a is rotatable at least substantially as a whole when the vertical form fill sealing machine 10a does not fill packages and/or seal packaging material. Alternatively or additionally, it is also conceivable that the transverse sealing 10a device is rotatable at least substantially as a whole around the rotation axis 16a of the transverse sealing device 14a by hand free from any addition mechanical control elements or the like.

Figure 3 shows the transverse sealing device 14a in a detailed view. The transverse sealing device 14a comprises at least one movement unit 36a for moving the at least two sealing jaws 18a, 20a translationally relative to each other along a direction parallel to a horizontal movement axis 38a of the guide unit 82a of the transverse sealing device 14a and for moving the at least two sealing jaws 18a, 20a translationally along a direction parallel to a vertical movement axis 40a of the guide unit 82a, in particular relative to a frame (not shown here) of the transverse sealing device 14a. The horizontal movement axis 38a of the guide unit 82a runs at least substantially perpendicularly to the rotation axis 16a of the transverse sealing device 14a. The term "substantially perpendicularly" is here in particular to mean an orientation of a direction relative to a reference direction, wherein the direction and the reference direction, in particular viewed in a projection plane, include a 90°-angle and the angle has a maximum deviation of in particular less than 8°, advantageously less than 5° and especially advantageously less than 2°. The vertical movement axis 40a of the guide unit 82a runs at least substantially parallel to the rotation axis 16a of the transverse sealing device 14a. The term "substantially parallel" is here in particular to mean an orientation of a direction relative to a reference direction, in particular in a plane, wherein the direction has a deviation from the reference direction that is smaller than 8°, advantageously smaller than 5° and especially advantageously smaller than 2°. The at least two sealing jaws 18a, 20a are configured to seal a packaging material, which is in particular arrangeable between the at least two sealing jaws 18a, 20a. The horizontal movement axis 38a of the guide unit 82a runs at least substantially perpendicularly to the sealing surfaces 76a of the at least two sealing jaws 18a, 20a. The sealing surfaces 76a of the at least two sealing jaws run at least substantially perpendicularly to the vertical movement axis 38a of the guide unit 82a. The rotation axis 16a of the transverse sealing device 14a runs at least substantially parallel to the sealing surfaces 76a of the at least two sealing jaws 18a, 20a.

The transverse sealing device 14a comprises at least two drive units 42a, 44a for driving the movement unit 36a. The movement unit 36a is configured to convert a power generatable by the at least two drive units 42a, 44a to the at least two sealing jaws18a, 20a into a horizontal movement of the at least two sealing jaws 18a, 20a relative to each other and/or to generate a vertical movement of the at least two sealing jaws 18a, 20a, in particular relative to the frame 12a.The at least two drive units 42a, 44a of the transverse sealing device 14a are implemented as electromotors. Alternatively, it is also conceivable that the at least two drive units 42a, 44a of the transverse sealing device 14a are implemented as pneumatic motors or as another drive unit that appears reasonable to a person skilled in the art. The at least two drive units 42a, 44a of the transverse sealing device 14a are arranged in an at least substantially positionally fixed manner relative to the machine frame 12a. In particular, that a drive unit is arranged "in an at least substantially positionally fixed manner" means free from any movement other than a movement of mechanical components of the drive unit which inevitably move during operation of the drive unit.

The at least two drive units 42a, 44a are connected to each other by the movement unit 36a in such a way that a horizontal movement and/or a vertical movement of the that least two sealing jaws 18a, 20a is generatable by a joint drive of the movement unit 36a by means of the at least two drive units 42a, 44a. A horizontal or a vertical movement of the at least two sealing jaws 18a, 20a is only generatable by a drive executed by all of the at least two drive units 42a, 44a. If at least one of the at least two drive units 42a, 44a is in a resting state, the movement unit 36a is blocked from any movement, in particular other than vibrational movements causable by a drive of the movement unit 36a by only one of the at least two drive units 42a, 44a, for generating a horizontal movement and/or a vertical movement of the at least two sealing jaws 18a, 20a. If the movement unit 36a is free from a drive executed by at least one of the at least two drive units 42a, 44a, a movement of the movement unit 36a for generating a horizontal movement and/or a vertical movement of the at least two sealing jaws 18a, 20a is blocked.

The movement unit 36a is drivable by the joint drive by means of the at least two drive units 42a, 44a in such a way that merely a horizontal movement of the at least two sealing jaws 18a, 20a is generated, in particular relative to a frame (not shown here) of the transverse sealing device 14a. The movement unit 36a is drivable by the joint drive by means of the at least two drive units 18a, 20a in such a way that merely a vertical movement of the at least two sealing jaws 18a, 20a is generated, in particular relative to the frame of the transverse sealing device 14a. It is also conceivable that the movement unit 36a is drivable by the joint drive by means of the at least two drive units 42a, 44a in such a way that simultaneously a horizontal movement and a vertical movement of the at least two sealing jaws 18a, 20a is generated, in particular relative to the frame of the transverse sealing device 14a.

The movement unit 36a comprises two movement elements 46a, 48a in order to create a movable connection between the two drive units 42a, 44a and the at least two sealing jaws 18a, 20a. The two movement elements 46a, 48a are implemented as arms. Alternatively, it is also conceivable that the two movement elements 46a, 48a are implemented as beams, as bearing elements, in particular as torque resistant linear bushings, as gear wheels or the like. The movement unit 36a comprises at least one drive connection element 94a to connect the at least two drive units 42a, 44a mechanically to each other. The drive connection element 94a is implemented as a beam. Alternatively, it is also conceivable that the drive connection element 94a is implemented as an arm, a bearing element, in particular a torque resistant linear bushing, a gear wheel or the like. The drive connection element 94a is connected to the at least two drive units 42a, 44a by the two movement elements 46a, 48a of the movement unit 36a. Alternatively, it is also conceivable that at least one drive unit 42a, 44a of the at least two drive units 42a, 44a is directly connected, in particular movably connected, to the drive connection element 94a, preferably free from any additional movement elements. The drive connection element 94a is connected to the at least two sealing jaws 18a, 20a via at least one additional movement element 96a of the movement unit 36a, which is preferably connected to the drive connection element 94a in a rotationally fixed manner. The movement unit 36a comprises at least two slider elements 98a, which are in particular movably, in particular rotatably, connected to the additional movement element 94a and/or the at least two sealing jaws 18a, 20a.

The drive connection element 94a, the two slider elements 98a and the additional movement element 96a are components of a crank slider mechanism 100a, which is in particular arranged between the at least two movement elements 46a, 48a and the at least two sealing jaws 18a, 20a. The two slider elements 98a are implemented as arms. Alternatively, the two slider elements are implemented as beams, bearing elements, gear wheels, or the like. The drive connection element 94a is preferably connected to the additional movement element 96a via a rod 102a or the like. Alternatively it is also conceivable that the additional movement element 96a and the drive connection element 94a are implemented integrally with each other. The crank slider mechanism 100a is preferably configured to convert a driving force generatable by the at least two drive units 18a, 20a, in particular a movement of the drive connection element 94a, into a horizontal and/or vertical movement of the at least two sealing jaws 18a, 20a. The drive connection element 94a is merely movable by the joint drive of the at least two drive units18a, 20a. In particular, in a preferred implementation of the invention, the drive connection element can be driven to rotate around a rotation axis 104a of the drive connection element 94a by the joint drive by means of the at least two drive units 18a, 20a such as to generate a horizontal movement of the at least two sealing jaws 18a, 20aThe rotation axis 104a of the drive connection element 94a runs at least substantially parallel to the sealing surfaces 76a of at least two sealing jaws 18a, 20a. The rotation axis 104a of the drive connection element 94a runs at least substantially perpendicularly to the horizontal movement axis 38a of the guide unit 82a and to the vertical movement axis 40a of the guide unit 82a.

The movement unit 36a has an analogous structure on both sides of the at least two sealing jaws 18a, 20a. The movement unit 36a comprises a further drive connection element 106a, which is in particular implemented identically to the drive connection element 94a. Alternatively it is also conceivable that the further drive connection element 106a is embodied differently from the drive connection element 94a. The drive connection element 94a and the further drive connection element 106a are arranged on averted sides of the at least two sealing jaws 18a, 20a. A connection of the further drive connection element 106a to the at least two sealing jaws 18a, 20a is preferably analogous to a connection of the drive connection element 94a to the at least two sealing jaws 18a, 20a. A connection of the further drive connection element 106a to the at least two drive units 42a, 44a is analogous to a connection of the drive connection element 94a to the at least two drive units 42a, 44a. The movement unit 36a comprises at least two further movement elements 54a, 56a, whose connection with the at least two sealing jaws 18a, 20a is analogous to a connection of the at least two movement elements 46a, 48a with the at least two sealing jaws 18a, 20a. A connection of the at least two further movement elements 54a, 56a with the further drive connection element 106a is analogous to a connection of the at least two movement elements 46a, 48a with the drive connection element 94a. A connection of the at least two further movement elements 54a, 56a with the at least two drive units 42a, 44a is analogous to a connection of the at least two movement elements 46a, 48a with the at least two drive units 42a, 44a. The at least two movement elements 46a, 48a and the at least two further movement elements 54a, 56a are arranged on averted sides of the at least two sealing jaws 18a, 20a. The at least two drive units 42a, 44a are arranged at least partially sideways to the at least two sealing jaws 18a, 20a, at least viewed in a direction parallel to the horizontal movement axis 38a. Alternatively, it is also conceivable that the two drive units 42a, 44a are arranged in a central position relative to the at least two movement elements 46a, 48a and the at least two further movement elements 54a, 56a, preferably at least viewed in the direction parallel to the horizontal movement axis 38a of the guide unit 82a. Furthermore, it is alternatively also conceivable that the at least two drive units 42a, 44a are arranged differently, in particular in a way that appears reasonable to a person skilled in the art. The movement unit 36a is implemented of four movement elements 46a, 48a, 54a, 56a, in particular the two movement elements 46a, 48a and the two further movement elements 54a, 56a, two drive connection elements 94a, 106a, in particular the drive connection element 94a and the further drive connection element 106a, four slider elements 98a, two of the four slider elements 98a being embodied by the already aforementioned at least two slider elements 98a, two rods 102a, one of the two rods 102a being in particular embodied by the already aforementioned rod 102a, and two additional movement elements 96c, one of the two additional movement elements 96a being embodied by the already aforementioned additional movement element 96a. Alternatively it is also conceivable that the movement unit 36a is implemented of merely one drive connection element, one rod, two movement elements, two slider elements and one additional movement element. Furthermore, other embodiments of the movement unit 36a are conceivable which seem to be reasonable for a person skilled in the art. In particular, it is conceivable that the movement unit 36a is embodied without any rods 102a.

Each of the at least two drive units 42a, 44a comprises at least one drive shaft 108a. A drive direction of a drive unit 42a, 44a of the at least two drive units 42a, 44a corresponds to a direction of rotation of a rotation of the drive shaft 108a around the rotation axis 110a of the drive shaft 108a. The rotation axes 110a of the drive shafts 108a correspond to main extension axes of the respective drive shafts 108a. The rotation axes 110a of the drive shafts 108a of the at least two drive units 42a, 44a preferably run at least substantially parallel to the sealing surfaces 76a of the at least two sealing jaws 18a, 20a. The rotations axes 110a of the drive shafts 108a of the at least two drive units 42a, 44a run at least substantially perpendicularly to the horizontal movement axis 38a and the vertical movement axis 40a of the guide unit 82a. The rotation axes 110a of the drive shafts 108a of the at least two drive units 42a, 44a run at least substantially parallel to each other. Alternatively it is also conceivable that the rotation axes 110a of the drive shafts 108a of the at least two drive units 42a, 44a run transversely, preferably at least substantially perpendicularly, relative to each other. The drive shaft 108a of one drive unit 42a of the at least two drive units 42a, 44a is directly connected to one movement element 46a of the two movement elements 46a, 48a and to one movement element 56a of the at least two further movement elements 54a, 56a. A drive shaft 108a of a further drive unit 44a of the at least two drive units 42a, 44a is directly connected to a further movement element 48a of the at least two movement elements 46a, 48a and to a further movement element 54a of the at least two further movement elements 54a 56a.

The drive connection element 94a and the further drive connection element 106a can be driven to move translationally along a direction parallel to a translational movement axis of the drive connection element 94a and the further drive connection element 106a by the joint drive by means of the at least two drive units 42a, 44a in order to generate a vertical movement of the at least two sealing jaws 42a, 44a, in particular relative to the frame of the transverse sealing device 14a. The translational movement axis of the drive connection element 94a and the further drive connection element 106a runs transversely, particularly preferably at least substantially perpendicularly, to the rotation axis 104a of the drive connection element 94a. The translational movement axis runs preferably at least substantially parallel to the vertical movement axis 40a of the guide unit 82a and/or the sealing surfaces 76a of the at least two sealing jaws 18a, 20a. The translational movement axis runs at least substantially perpendicularly to the horizontal movement axis 40a of the guide unit 82a.

A vertical movement of the at least two sealing jaws 18a, 20a is generatable by a parallel drive of the movement unit 36a by means of the at least two drive units 42a, 44a. A vertical movement of the at least two sealing jaws 18a, 20a is generatable by a parallel drive of the drive connection element 94a and the further drive connection element 106a by means of the at least two drive units 42a, 44a. A parallel drive of the drive connection element 94a and the further drive connection element 106a by the at least two drive units 42a, 44a shall be understood to mean that the movements transmitted to the drive connection element 94a and the further drive connection element 106a, which are generatable by the at least two drive units 42a, 44a, coincide at least in their direction and in their velocity. The components of the crank slider mechanism 100a are, via a parallel drive of the movement unit 36a by means of the at least two drive units 42a, 44a, moved as a whole merely translationally in order to generate a vertical movement of the at least two sealing jaws 18a, 20a. Drive directions of the at least two drive units 42a, 44a for generating a parallel drive of the movement unit 36a, in particular the drive connection element 94a and the further drive connection element 106a, are oriented opposite to each other. Alternatively it is also conceivable that the drive directions of the at least two drive units 42a, 44a coincide in order to generate a parallel drive of the movement unit 36a, in particular the drive connection element 94a and the further drive connection element 106a. It is conceivable that absolute values of drive speeds of the at least two drive units 42a, 44a coincide with or differ from each other for generating a parallel drive of the movement unit 36a, in particular the drive connection element 94a and the further drive connection element 106a, preferably depending on the arrangement of the at least two drive units 42a, 44a relative to each other and/or the arrangement of the movement unit 36a. The drive directions of the at least two drive units 42a, 44a depend on the arrangement of the at least two drive units 42a, 44a relative to each other and/or the arrangement of the movement unit 36a. Alternatively, it is also possible that the two drive units 42a, 44a are arranged and/or implemented in such a way that a parallel drive of the movement unit 36a is generatable by a synchronous operation of the at least two drive units 42a, 44a. The movement unit 36a is arranged in such a way that a parallel drive of the movement unit 36a, in particular the drive connection element 94a and the further drive connection element 106a, generates a translational movement of the drive connection element 94a and the further drive connection element 106a along the direction parallel to the translational movement axis of the drive connection element 94a and the further drive connection element 106a for the purpose of generating a vertical movement of the at least two sealing jaws 18a, 20a, in particular relative to the frame of the transverse sealing device 14a.

A horizontal movement of the at least two sealing jaws 18a, 20a relative to each other is generatable by a non-parallel drive of the movement unit 36a by means of the at least two drive units 42a, 44a. A non-parallel drive of the drive connection element 94a and the further drive connection element 106a by the at least two drive units 42a, 44a is to mean that the movements transmitted to the drive connection element 94a and the further drive connection element 106a, which are generatable by the at least two drive units 42a, 44a, differ at least in their directions. The directions of the movements, which are in particular generatable by means of the at least two drive units 42a, 44a, and are transmitted to the drive connection element 94a and the further drive connection element 106a in the case of a non-parallel drive of the drive connection element 94a and the further drive connection element 106a, are oriented opposite to one another. The movements transmitted to the drive connection element 94a and the further drive connection element 106a by a non-parallel drive of the movement unit 36a, in particular the drive connection element 94a and the further drive connection element 106a, by means of the at least two drive units 42a, 44a coincide at least in a direction and in a velocity. The crank slider mechanism 100a is connected to the at least two drive units 42a, 44a in such a way that by a non-parallel drive of the movement unit 36a by means of the at least two drive units 42a, 44a, the crank slider mechanism 100a is configured to generate a horizontal movement of the at least two sealing jaws 18a, 20a. A horizontal movement of the at least two sealing jaws 18a, 20a, in particular relative to the frame of the transverse sealing device 14a, is generatable by a non-parallel drive of the drive connection element 94a and the further drive connection element 106a by means of the at least two drive units 42a, 44a. It is conceivable that a non-parallel drive of the movement unit 36a, in particular the drive connection element 94a and the further drive connection element 106a, is generatable by an asynchronous operation of the at least two drive units 42a, 44a. The drive directions of the at least two drive units 42a, 44a in this exemplary embodiment coincide for generating a non-parallel drive of the movement unit 36a, preferably the drive connection element 94c and the further drive connection element 106a. The movement unit 36a is arranged in such a way that a non-parallel drive of the movement unit 36a, in particular the drive connection element 94a and the further drive connection element 106a, generates a rotational movement of the drive connection element 94a and the further drive connection element 106a around the rotation axes 104a of the drive connection element 94a and the further drive connection element 106a, in particular in order to generate a horizontal movement of the at least two sealing jaws 18a, 20a. It is conceivable that the absolute values of the drive speeds of the at least two drive units 42a, 44a coincide with or differ from each other in order to generate a parallel drive of the movement unit 36a, in particular the drive connection element 94a and the further drive connection element 106a, preferably depending on the arrangement of the at least two drive units 42a, 44a relative to each other and/or the arrangement of the movement unit 36a. Alternatively it is also conceivable that the drive directions of the at least two drive units 42a, 44a differ from each other, preferably are oriented opposite to each other, for the purpose of generating a non-parallel drive of the movement unit 36a, in particular the drive connection element 94a and the further drive connection element 106a.

The two movement elements 46a, 48a are movably, in particular rotatably, connected to each other. One drive unit 42a of the at least two drive units 42a, 44a is mechanically connected to one movement element 46a of the at least two movement elements 46a, 48a for driving the movement element 46a. A further drive unit 44a of the at least two drive units 42a, 44a is mechanically connected to a further movement element 48a of the at least two movement elements 46a, 48a for driving the further movement element 48c. The two movement elements 46a, 48a and the further two movement elements 54a, 56a are each movably, in particular rotatably, connected to one of the drive shafts 108a of the at least two drive units 42a, 44a, in particular via link arms 112a of the at least two drive units 42a, 44a, which are preferably arranged on the drive shafts 108a of the two drive units 42a, 44a in a fixed position relative to the respective drive shaft 108a.

The movement unit 36a is arranged at least substantially completely sideways relative to the at least two sealing jaws 18a, 20a, at least viewed in a direction parallel to the horizontal movement axis 38a of the guide unit 82a. By the fact that an object is arranged "at least substantially completely sideways relative to a further object" is here in particular to be understood that at least 50%, preferably 75% and particularly preferably at least 90% of a total volume and/or a total mass of the object are arranged sideways relative to the further object. Preferably, in at least one operation state of the movement unit, the movement unit is arranged completely sideways relative to the at least two sealing jaws, at least viewed in the direction parallel to the horizontal movement axis. The movement unit 36a is embodied differently from the drive unit 44a and/or the further drive unit 42a. The movement unit 36a is embodied differently from a guide unit 82a of the transverse sealing device 14a, in particular at least differently from positionally fixed guide elements of the transverse sealing device 14a. The guide unit 82a is preferably configured to guide a movement of the at least two sealing jaws 18a, 20a. The at least two sealing jaws 18a, 20a are, in particular linearly, movably supported along the direction parallel to the horizontal movement axis 38a of the guide unit 82a. The at least two sealing jaws 18a, 20a are, in particular linearly, movably supported along the direction parallel to a vertical movement axis 40a of the guide unit 82a. The movement unit 36a is arranged sideways relative to the at least two sealing jaws 18a, 20a in such a way that the movement unit 36a is positioned at least substantially completely within a proximity area of the at least two sealing jaws 18a, 20a. By the fact that the movement unit 82a is arranged sideways relative to the at least two sealing jaws 18a, 20a in such way that the movement unit 36a is positioned at least substantially completely within the proximity area of the at least two sealing jaws 18a, 20a, is here to be understood that the movement unit 36a is arranged sideways relative to the at least two sealing jaws 18a, 20a in such a way that at least 50%, preferably 75% and particularly preferably at least 90% of a total volume and/or a total mass of the movement unit 36a are arranged sideways relative to the at least two sealing jaws 18a, 20a within the proximity area of the at least two sealing jaws 18a, 20a. In particular, the proximity area of the at least two sealing jaws 18a, 20a extends by up to 20 %, preferably by up to 10 % and particularly preferably by up to 5 % of a maximum movement range of the at least two sealing jaws 18a, 20a in the direction parallel to the horizontal movement axis 38a beyond the at least two sealing jaws 18a, 20a. Preferably, the proximity area of the at least two sealing jaws 18a, 20a extends by up 20 %, preferably by up to 10 % and particularly preferably by up to 5 % of a maximum movement range of the at least two sealing jaws 18a, 20a along the direction parallel to the vertical movement axis 38a beyond the at least two sealing jaws 18a, 20a. Particularly preferably, the proximity area of the at least two sealing jaws 18a, 20a extends by up to 20 %, preferably up to 10 % and particularly preferably up to 5 % of a maximum extension of the at least two sealing jaws 18a, 20a perpendicularly to the vertical movement axis 40a and the horizontal movement axis 38a, beyond the at least two sealing jaws 18a, 20a.

The at least two sealing jaws 18a, 20a are pullable into a sealing position by means of the movement unit 36a. The at least two sealing jaws 18a, 20a are movable relative to each other into the sealing position free from a direct pushing movement on the at least two sealing jaws 18a, 20a by means of the movement unit 36a. The at least two sealing jaws 18a, 20a are pullable, relative to each other, into the sealing position along the direction parallel to the horizontal movement axis 38a by means of the movement unit 36a. The movement unit 36a is connected to the at least two sealing jaws 18a, 20a in such a way that the movement unit 36a is configured to generate a direct pulling force to pull the at least two sealing jaws 18a, 20a relative to each other into the sealing position. The movement unit 36a is connected to the at least two sealing jaws 18a, 20a in such a way that the at least two sealing jaws 18a, 20a are moved, in particular pulled, relative to each other in a synchronous movement. Alternatively it is also conceivable that the movement unit 36a is connected to the at least two sealing jaws 18a, 20a in such a way that the at least two sealing jaws 18a, 20a are moved, in particular pulled, relative to each other in an asynchronous movement.

Figure 4 shows schematically a flow chart of a method for operating the transverse sealing device. In a process step 58a the at least two sealing jaws 18a, 20a of the transverse sealing device 14a are moved translationally along the direction parallel to the horizontal movement axis 18a and/or the vertical movement axis 40a of the guide unit 82a by the joint drive of the movement unit 36c of the transverse sealing device 14a by means of the at least two drive units 42a, 44a of the transverse sealing device 14a. The horizontal movement and/or the vertical movement of the at least two sealing jaws 18a, 20a are/is generated by a drive executed by all of the at least two drive units 42a, 44a. In the process step 58a a power generated by the at least two drive units 42a, 44a is transmitted by means of the movement unit 36a to the at least two sealing jaws 18a, 20a in order to generate a horizontal movement of the at least two sealing jaws 18a, 20a relative to each other and/or to generate a vertical movement of the at least two sealing jaws 18a, 20a, in particular relative to the frame of the transverse sealing device 14a. It is conceivable that in the process step 58a the movement unit 36a is driven by the joint drive by means of the at least two drive units 42a, 44a in such a way that only a horizontal movement or a vertical movement of the at least two sealing jaws 18a, 20a is generated. In the process step 58a the drive connection element 94a and the further drive connection element 106a are driven to rotate around the rotation axes 104a of the drive connection element 94a and the further drive connection element 106a by the joint drive by means of the at least two drive units 42a, 44a for the purpose of generating a horizontal movement of the at least two sealing jaws 18a, 20a. Alternatively, it is also conceivable that in the process step 58a the drive connection element 94a and the further drive connection element 106a are driven to rotate around the rotation axes 104a of the drive connection element 94a and the further drive connection element 106a by the joint drive by means of the at least two drive units 42a, 44a for the purpose of generating a vertical movement of the at least two sealing jaws 18a, 20a. In the process step 58a the drive connection element 94a and the further drive connection element 106a are driven to move translationally along the direction parallel to the translationally movement axis of the drive connection element 94a and the further drive connection element 106a by the joint drive by means of the at least two drive units 42a, 44a for the purpose of generating a vertical movement of the at least two sealing jaws 18a, 20a. In the process step 58a a drive force generated by the at least two drive units 42a, 44a, in particular a movement of the drive connection element 94a and the further drive connection element 106a, is converted by the crank slider mechanism 100a into a horizontal and/or vertical movement of the at least two sealing jaws 18a, 20a.

In the process step 58a the movement unit 36a, in particular the at least two movement elements 46a, 48a of the movement unit 36a, is driven in parallel by the at least two drive units 42a, 44a in order to generate a vertical movement of the at least two sealing jaws 18a, 20a. In the process step 58a the vertical movement of the at least two sealing jaws 18a, 20a is generated by a parallel drive of the drive connection element 94a and the further drive connection element 106a by means of the at least two drive units 42a, 44a. In the process step 58a the movement unit 36a, in particular the at least two movement elements 46a, 48a of the movement unit 36a, is driven in opposite directions by the at least two drive units 42a, 44a in order to generate a horizontal movement of the at least two sealing jaws 18a, 20a. In the process step 58a a horizontal movement of the at least two sealing jaws 18a, 20a is generated by a non-parallel drive of the drive connection element 94a and the further drive connection element 106a by means of the at least two drive units 42a, 44a. In a further process step 114a a packaging material is sealed by the at least two sealing jaws 18a, 20a.

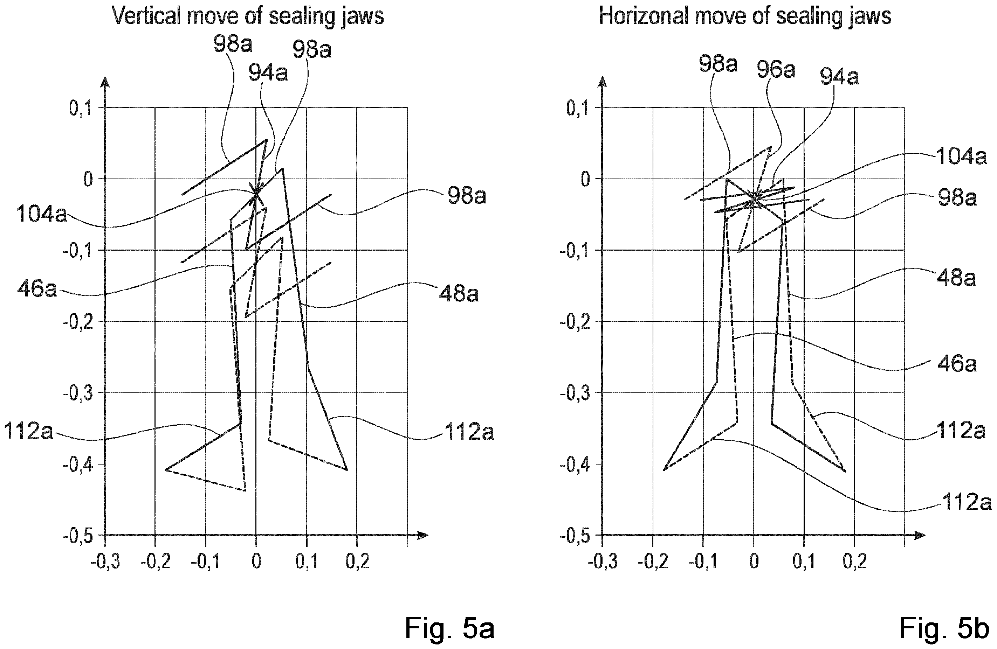

Figure 5a schematically shows the movement unit 36a in two different vertical positions of the at least two sealing jaws 18a, 20a. The movement unit 36a shown in dashed lines is an arrangement of the movement unit 36a in a first vertical position of the at least two sealing jaws 18a, 20a. The movement unit 36a shown in continuous lines is an arrangement of the movement element 36a in a second vertical position of the at least two sealing jaws 18a, 20a. A relative arrangement of the two slider elements 98a, the additional movement element 96a and the drive connection element 94a of the movement unit 36a is fixed during a merely vertical movement of the at least two sealing jaws 18a, 20a.

Figure 5b schematically shows the movement unit 36a in two different horizontal positions of the at least two sealing jaws 18a, 20a relative to each other. The movement unit 36a shown in dashed lines is an arrangement of the movement unit 36a in a first horizontal position of the at least two sealing jaws 18a, 20a. The movement unit 36a shown in continuous lines is an arrangement of the movement element 36a in a second horizontal position of the at least two sealing jaws 18a, 20a, in particular in the sealing position. A relative arrangement of the two slider elements 98a, the additional movement element 96a and the drive connection element 94a of the movement unit 36a is changed during a horizontal movement of the at least two sealing jaws 18a, 20a relative to each other.

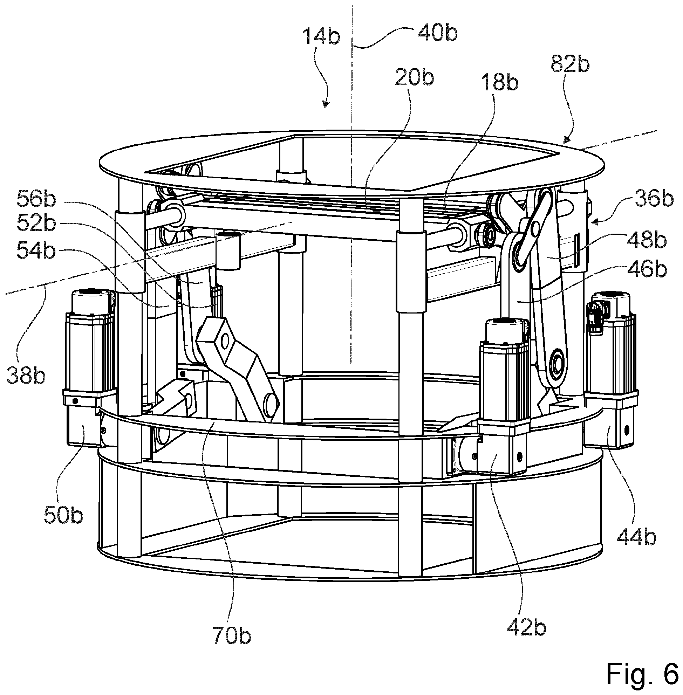

In figure 6 a further exemplary embodiment of the invention is illustrated. The following description and the drawings are essentially limited to the differences between the exemplary embodiments, wherein as regards identically denominated components, in particular components having the same reference numerals, the drawings and/or the description of the other exemplary embodiment, in particular of figures 1 to 5b, may principally be referred to. In order to distinguish between the exemplary embodiments, the letter a has been added to the reference numerals of the exemplary embodiment of figures 1 to 5b. In the exemplary embodiment of figure 6 the letter a has been substituted by the letter b.

In figure 6 a transverse sealing device 14b is shown for a sealing of a package or a packaging material. The transverse sealing device 14b comprises at least two sealing jaws 18b, 20b. The transverse sealing device 14b comprises at least one movement unit 36b, which is configured for moving the at least two sealing jaws 18b, 20b translationally relative to each other along a direction parallel to a horizontal movement axis 38b of a guide unit 82b of the transverse sealing device 14b and for moving the at least two sealing jaws 18b, 20b translationally along a direction parallel to a vertical movement axis 40b of the guide unit 82b.

The movement unit 36b comprises at least four movement elements 46b, 48b, 54b, 56b. Each of four drive units 42b, 44b, 50b, 52b is mechanically connected to one of the four movement elements 46b, 48b, 54b, 56b for driving the four movement elements 46b, 48b, 54b, 56b so as to generate a vertical and/or horizontal movement of the at least two sealing jaws 18b, 20b. The at least four movement elements 46b, 48b, 54b, 56b correspond to the at least two movement elements 46a, 48a and the at least two further movement elements 54a, 56a of the embodiment of figure 3. The four movement elements 46b, 48b, 54b, 56b are free from any direct connection to each other, in particular via a drive shaft, or the like. The four drive units 42b, 44b, 50b, 52b are arranged in an at least substantially positionally fixed manner relative to a frame 70b of the transverse sealing device 14b. The movement unit 36b is arranged at least substantially completely sideways relative to the at least two sealing jaws 18b, 20b, at least viewed in a direction parallel to the horizontal movement axis 38b of the guide unit 82b. The movement unit 36b is arranged sideways relative to the at least two sealing jaws 18b, 20b in such a way that the movement unit 36c is positioned at least substantially completely within a proximity area of the at least two sealing jaws 18b, 20b, at least viewed in the direction parallel to the horizontal movement axis 38b of the guide unit 82b. The at least two sealing jaws 18b, 20b are pullable into a sealing position by means of the movement unit 36b.

## Claims

1. Transverse sealing device (14a; 14b) for sealing a package or a packaging material, comprising at least two sealing jaws (18b, 20b; 18b, 20b), comprising at least one guide unit (82a; 82b) to guide a movement of the at least two sealing jaws (18a, 20a; 18b, 20b), comprising at least one movement unit (36a; 36b) to move the at least two sealing jaws (18a, 20a; 18b, 20b) translationally relative to each other along a direction parallel to a horizontal movement axis (38a; 38b) of the guide unit (82a; 82b) and to move the at least two sealing jaws (18a, 20a; 18b, 20b) translationally along a direction parallel to a vertical movement axis (40a; 40b) of the guide unit (82a; 82b) and comprising at least two drive units (42a, 44a; 42b, 44b) to drive the movement unit (36a; 36b), wherein the at least two drive units (42a, 44a; 42b, 44b) are connected to each other by the movement unit (36a; 36b) in such a way that a horizontal movement and/or a vertical movement of the at least two sealing jaws (18a, 20a; 18b, 20b) is generatable by a joint drive of the movement unit (36a; 36b) by means of the at least two drive units (42a, 44a; 42b, 44b), **characterized in that** a horizontal movement or a vertical movement of the at least two sealing jaws (18a, 20a; 18b, 20b) is only generatable by a drive by all of the at least two drive units (42a, 44a; 42b, 44b).

2. Transverse sealing device (14a; 14b) according to Claim 1, **characterized in that** a vertical movement of the at least two sealing jaws (18a, 20a; 18b, 20b) is generatable by a parallel drive of the movement unit (36a; 36b) by means of the at least two drive units (42a, 44a; 42b, 44b).

3. Transverse sealing device (14a; 14b) according to Claim 1 or 2, **characterized in that** a horizontal movement of the at least two sealing jaws (18a, 20a; 18b, 20b) relative to each other is generatable by a non-parallel drive of the movement unit (36a; 36b) by means of the at least two drive units (42a, 44a; 42b, 44b).

4. Transverse sealing device (14a; 14b) according to one of the preceding claims, **characterized in that** the movement unit (36a; 36b) comprises at least two movably connected movement elements (46a, 48a; 46b; 48b), wherein one drive unit (42a; 42b) of the at least two drive units (42a, 44a; 42b, 44b) is mechanically connected to one movement element (46a; 46b) of the at least two movement elements (46a, 48a; 46b, 48b) to drive the movement element (46a; 46b) and a further drive unit (44a; 44b) of the at least two drive units (42a, 44a; 42b, 44b) is mechanically connected to a further movement element (48a; 48b) of the at least two movement elements (46a, 48a; 46b, 48b) to drive the further movement element (48a; 48b).

5. Transverse sealing device (14b) according to one of the preceding claims, **characterized by** at least four drive units (42b, 44b, 50b, 52b) to drive the movement unit (36b), wherein the movement unit (36b) comprises at least four movement elements (46b, 48b, 54b, 56b), wherein each of the four drive units (42b, 44b, 50b, 52b) is mechanically connected to one of the four movement elements (46b, 48b, 54b, 56b) to drive the four movement elements (46b, 48b, 54b, 56b) to generate a vertical and/or horizontal movement of the at least two sealing jaws (18b, 20b).

6. Transverse sealing device (14a; 14b) according to one of the preceding claims, **characterized by** a frame (70a; 70b) to which the at least two drive units (42a, 44a; 42b, 44b) to drive the movement unit (36a; 36b) to generate a vertical and/or horizontal movement of the at least two sealing jaws (18a, 20a; 18b, 20b) are arranged at least substantially statically.

7. Method for operating a transverse sealing device (14a; 14b) according to one of the preceding claims, wherein in one process step (58a; 58b) the at least two sealing jaws (18a, 20a; 18b, 20b) of the transverse sealing device (14a; 14b) are moved translationally along the horizontal movement axis (38a; 38b) and/or the vertical movement axis (40a; 40b) of the guide unit (82a; 82b) of the transverse sealing device (14a; 14b) by a joint drive of the movement unit (36a; 36b) of the transverse sealing device (14a; 14b) by means of the at least two drive units (42a, 44a; 42b, 44b)of the transverse sealing device (14a; 14b), **characterized in that** a horizontal movement or a vertical movement of the at least two sealing jaws (18a, 20a; 18b, 20b) is only generated by a drive by all of the at least two drive units (42a, 44a; 42b, 44b).

8. Method according to Claim 7, **characterized in that** in one process step (58a; 58b) the movement unit (36a; 36b), in particular at least two movement elements (46a, 48a; 46b, 48b) of the movement unit (36a; 36b), is driven in parallel by the at least two drive units (42a, 44a; 42b, 44b) to generate a vertical movement of the at least two sealing jaws (18a, 20a; 18b, 20b).

9. Method according to Claim 7 or 8, **characterized in that** in one process step (58a; 58b) the movement unit (36a; 36b), in particular at least two movement elements (46a, 48a; 46b 48b) of the movement unit (36a; 36b), is driven in opposite directions by the at least two drive units (42a, 44a; 42b, 44b) to generate a horizontal movement of the at least two sealing jaws (18a, 20a; 18b, 20b).

10. Vertical form fill sealing machine (10a; 10b) comprising at least a machine frame (12a; 12b) and at least the transverse sealing device (14a; 14b) according one of Claims 1 to 6.

## Patentansprüche

1. Quersiegelvorrichtung (14a; 14b) zum Versiegeln einer Verpackung oder eines Verpackungsmaterials, umfassend mindestens zwei Siegelbacken (18b, 20b; 18b, 20b), umfassend mindestens eine Führungseinheit (82a; 82b), um eine Bewegung der mindestens zwei Siegelbacken (18a, 20a; 18b, 20b) zu führen, umfassend mindestens eine Bewegungseinheit (36a; 36b), um die mindestens zwei Siegelbacken (18a, 20a; 18b, 20b) relativ zueinander entlang einer Richtung parallel zu einer horizontalen Bewegungsachse (38a; 38b) der Führungseinheit (82a; 82b) translatorisch zu bewegen, und um die mindestens zwei Siegelbacken (18a, 20a; 18b, 20b) entlang einer Richtung parallel zu einer vertikalen Bewegungsachse (40a; 40b) der Führungseinheit (82a; 82b) translatorisch zu bewegen, und umfassend mindestens zwei Antriebseinheiten (42a, 44a; 42b, 44b), um die Bewegungseinheit (36a; 36b) anzutreiben, wobei die mindestens zwei Antriebseinheiten (42a, 44a; 42b, 44b) durch die Bewegungseinheit (36a; 36b) derart miteinander verbunden sind, dass durch einen gemeinsamen Antrieb der Bewegungseinheit (36a; 36b) mittels der mindestens zwei Antriebseinheiten (42a, 44a; 42b, 44b) eine Horizontalbewegung und/oder eine Vertikalbewegung der mindestens zwei Siegelbacken (18a, 20a; 18b, 20b) erzeugbar ist,
**dadurch gekennzeichnet, dass** eine Horizontalbewegung oder eine Vertikalbewegung der mindestens zwei Siegelbacken (18a, 20a; 18b, 20b) nur durch einen Antrieb durch alle der mindestens zwei Antriebseinheiten (42a, 44a; 42b, 44b) erzeugbar ist.

2. Quersiegelvorrichtung (14a; 14b) nach Anspruch 1,
**dadurch gekennzeichnet, dass** durch einen parallelen Antrieb der Bewegungseinheit (36a; 36b) mittels der mindestens zwei Antriebseinheiten (42a, 44a; 42b, 44b) eine Vertikalbewegung der mindestens zwei Siegelbacken (18a, 20a; 18b, 20b) erzeugbar ist.

3. Quersiegelvorrichtung (14a; 14b) nach Anspruch 1 oder 2,
**dadurch gekennzeichnet, dass** durch einen nicht parallelen Antrieb der Bewegungseinheit (36a; 36b) mittels der mindestens zwei Antriebseinheiten (42a, 44a; 42b, 44b) eine Horizontalbewegung der mindestens zwei Siegelbacken (18a, 20a; 18b, 20b) relativ zueinander erzeugbar ist.

4. Quersiegelvorrichtung (14a; 14b) nach einem der vorstehenden Ansprüche, **dadurch gekennzeichnet, dass** die Bewegungseinheit (36a; 36b) mindestens zwei bewegbar verbundene Bewegungselemente (46a, 48a; 46b; 48b) umfasst, wobei eine Antriebseinheit (42a; 42b) der mindestens zwei Antriebseinheiten (42a, 44a; 42b, 44b) mit einem Bewegungselement (46a; 46b) der mindestens zwei Bewegungselemente (46a, 48a; 46b, 48b) mechanisch verbunden ist, um das Bewegungselement (46a; 46b) anzutreiben, und eine weitere Antriebseinheit (44a; 44b) der mindestens zwei Antriebseinheiten (42a, 44a; 42b, 44b) mit einem weiteren Bewegungselement (48a; 48b) der mindestens zwei Bewegungselemente (46a, 48a; 46b, 48b) mechanisch verbunden ist, um das weitere Bewegungselement (48a; 48b) anzutreiben.

5. Quersiegelvorrichtung (14b) nach einem der vorstehenden Ansprüche, **gekennzeichnet durch** mindestens vier Antriebseinheiten (42b, 44b, 50b, 52b), um die Bewegungseinheit (36b) anzutreiben, wobei die Bewegungseinheit (36b) mindestens vier Bewegungselemente (46b, 48b, 54b, 56b) umfasst, wobei jede der vier Antriebseinheiten (42b, 44b, 50b, 52b) mit einem der vier Bewegungselemente (46b, 48b, 54b, 56b) mechanisch verbunden ist, um die vier Bewegungselemente (46b, 48b, 54b, 56b) anzutreiben, um eine Vertikal- und/oder Horizontalbewegung der mindestens zwei Siegelbacken (18b, 20b) zu erzeugen.

6. Quersiegelvorrichtung (14a; 14b) nach einem der vorstehenden Ansprüche, **gekennzeichnet durch** ein Gestell (70a; 70b), an dem die mindestens zwei Antriebseinheiten (42a, 44a; 42b, 44b), um die Bewegungseinheit (36a; 36b) anzutreiben, um eine Vertikal- und/oder Horizontalbewegung der mindestens zwei Siegelbacken (18a, 20a; 18b, 20b) zu erzeugen, mindestens im Wesentlichen statisch angeordnet sind.

7. Verfahren zum Betreiben einer Quersiegelvorrichtung (14a; 14b) nach einem der vorstehenden Ansprüche, wobei in einem Prozessschritt (58a; 58b) die mindestens zwei Siegelbacken (18a, 20a; 18b, 20b) der Quersiegelvorrichtung (14a; 14b) durch einen gemeinsamen Antrieb der Bewegungseinheit (36a; 36b) der Quersiegelvorrichtung (14a; 14b) mittels der mindestens zwei Antriebseinheiten (42a, 44a; 42b, 44b) der Quersiegelvorrichtung (14a; 14b) entlang der horizontalen Bewegungsachse (38a; 38b) und/oder der vertikalen Bewegungsachse (40a; 40b) der Führungseinheit (82a; 82b) der Quersiegelvorrichtung (14a; 14b) translatorisch bewegt werden,
**dadurch gekennzeichnet, dass** eine Horizontalbewegung oder eine Vertikalbewegung der mindestens zwei Siegelbacken (18a, 20a; 18b, 20b) nur durch einen Antrieb durch alle der mindestens zwei Antriebseinheiten (42a, 44a; 42b, 44b) erzeugt wird.

8. Verfahren nach Anspruch 7, **dadurch gekennzeichnet, dass** in einem Prozessschritt (58a; 58b) die Bewegungseinheit (36a; 36b), insbesondere mindestens zwei Bewegungselemente (46a, 48a; 46b, 48b) der Bewegungseinheit (36a; 36b), durch die mindestens zwei Antriebseinheiten (42a, 44a; 42b, 44b) parallel angetrieben wird, um eine Vertikalbewegung der mindestens zwei Siegelbacken (18a, 20a; 18b, 20b) zu erzeugen.

9. Verfahren nach Anspruch 7 oder 8, **dadurch gekennzeichnet, dass** in einem Prozessschritt (58a; 58b) die Bewegungseinheit (36a; 36b), insbesondere mindestens zwei Bewegungselemente (46a, 48a; 46b, 48b) der Bewegungseinheit (36a; 36b), durch die mindestens zwei Antriebseinheiten (42a, 44a; 42b, 44b) in entgegengesetzte Richtungen angetrieben wird, um eine Horizontalbewegung der mindestens zwei Siegelbacken (18a, 20a; 18b, 20b) zu erzeugen.

10. Vertikale formfüllende Versiegelungsmaschine (10a; 10b) umfassend mindestens ein Maschinengestell (12a; 12b) und mindestens die Quersiegelvorrichtung (14a; 14b) nach einem der Ansprüche 1 bis 6.

## Revendications

1. Dispositif de scellement transversal (14a ; 14b) destiné à sceller un emballage ou un matériau d'emballage, comprenant au moins deux mâchoires de scellement (18b, 20b ; 18b, 20b), comprenant au moins une unité de guidage (82a ; 82b) pour guider un déplacement des au moins deux mâchoires de scellement (18a, 20a ; 18b, 20b), comprenant au moins une unité de déplacement (36a ; 36b) pour déplacer les au moins deux mâchoires de scellement (18a, 20a ; 18b, 20b) en translation l'une par rapport à l'autre le long d'une direction parallèle à un axe de déplacement horizontal (38a ; 38b) de l'unité de guidage (82a ; 82b) et à déplacer les au moins deux mâchoires de scellement (18a, 20a ; 18b, 20b) en translation le long d'une direction parallèle à un axe de déplacement vertical (40a ; 40b) de l'unité de guidage (82a ; 82b) et comprenant au moins deux unités d'entraînement (42a, 44a ; 42b, 44b) pour entraîner l'unité de déplacement (36a ; 36b), dans lequel les au moins deux unités d'entraînement (42a, 44a ; 42b, 44b) sont reliées l'une à l'autre par l'unité de déplacement (36a ; 36b) de telle sorte qu'un déplacement horizontal et/ou un déplacement vertical des au moins deux mâchoires de scellement (18a, 20a ; 18b, 20b) peut être généré par un entraînement commun de l'unité de déplacement (36a ; 36b) au moyen des au moins deux unités d'entraînement (42a, 44a ; 42b, 44b), **caractérisé en ce qu'**un déplacement horizontal ou un déplacement vertical des au moins deux mâchoires de scellement (18a, 20a ; 18b, 20b) ne peut être généré que par un entraînement par l'ensemble des au moins deux unités d'entraînement (42a, 44a ; 42b, 44b).

2. Dispositif de scellement transversal (14a ; 14b) selon la revendication 1, **caractérisé en ce qu'**un déplacement vertical des au moins deux mâchoires de scellement (18a, 20a ; 18b, 20b) peut être généré par un entraînement parallèle de l'unité de déplacement (36a ; 36b) au moyen des au moins deux unités d'entraînement (42a, 44a ; 42b, 44b).

3. Dispositif de scellement transversal (14a ; 14b) selon la revendication 1 ou 2, **caractérisé en ce qu'**un déplacement horizontal des au moins deux mâchoires de scellement (18a, 20a ; 18b, 20b) l'une par rapport à l'autre peut être généré par un entraînement non parallèle de l'unité de déplacement (36a ; 36b) au moyen des au moins deux unités d'entraînement (42a, 44a ; 42b, 44b).

4. Dispositif de scellement transversal (14a ; 14b) selon l'une quelconque des revendications précédentes, **caractérisé en ce que** l'unité de déplacement (36a ; 36b) comprend au moins deux éléments de déplacement (46a, 48a ; 46b ; 48b) reliés de manière mobile, dans lequel une unité d'entraînement (42a ; 42b) des au moins deux unités d'entraînement (42a, 44a ; 42b, 44b) est reliée mécaniquement à un élément de déplacement (46a ; 46b) des au moins deux éléments de déplacement (46a, 48a ; 46b, 48b) afin d'entraîner l'élément de déplacement (46a ; 46b) et une autre unité d'entraînement (44a ; 44b) des au moins deux unités d'entraînement (42a, 44a ; 42b, 44b) est reliée mécaniquement à un autre élément de déplacement (48a ; 48b) des au moins deux éléments de déplacement (46a, 48a ; 46b, 48b) afin d'entraîner l'autre élément de déplacement (48a ; 48b).

5. Dispositif de scellement transversal (14b) selon l'une quelconque des revendications précédentes, **caractérisé par** au moins quatre unités d'entraînement (42b, 44b, 50b, 52b) destinées à entraîner l'unité de déplacement (36b), dans lequel l'unité de déplacement (36b) comprend au moins quatre éléments de déplacement (46b, 48b, 54b, 56b), dans lequel chacune des quatre unités d'entraînement (42b, 44b, 50b, 52b) est reliée mécaniquement à l'un des quatre éléments de déplacement (46b, 48b, 54b, 56b) afin d'entraîner les quatre éléments de déplacement (46b, 48b, 54b, 56b) à générer un déplacement vertical et/ou horizontal des au moins deux mâchoires de scellement (18b, 20b).

6. Dispositif de scellement transversal (14a ; 14b) selon l'une quelconque des revendications précédentes, **caractérisé par** un cadre (70a ; 70b) sur lequel les au moins deux unités d'entraînement (42a, 44a ; 42b, 44b) destinées à entraîner l'unité de déplacement (36a ; 36b) afin de générer un déplacement vertical et/ou horizontal des au moins deux mâchoires de scellement (18a, 20a ; 18b, 20b) sont disposées au moins de manière sensiblement statique.

7. Procédé de fonctionnement d'un dispositif de scellement transversal (14a ; 14b) selon l'une quelconque des revendications précédentes, dans lequel, dans une étape de processus (58a ; 58b), les au moins deux mâchoires de scellement (18a, 20a ; 18b, 20b) du dispositif de scellement transversal (14a ; 14b) sont déplacés en translation le long de l'axe de déplacement horizontal (38a ; 38b) et/ou de l'axe de déplacement vertical (40a ; 40b) de l'unité de guidage (82a ; 82b) du dispositif de scellement transversal (14a ; 14b) par un entraînement commun de l'unité de déplacement (36a ; 36b) du dispositif de scellement transversal (14a ; 14b) au moyen des au moins deux unités d'entraînement (42a, 44a ; 42b, 44b) du dispositif de scellement transversal (14a ; 14b), **caractérisé en ce qu'**un déplacement horizontal ou un déplacement vertical des au moins deux mâchoires de scellement (18a, 20a ; 18b, 20b) n'est généré que par un entraînement par l'ensemble des au moins deux unités d'entraînement (42a, 44a ; 42b, 44b).

8. Procédé selon la revendication 7, **caractérisé en ce que,** dans une étape de processus (58a ; 58b), l'unité de déplacement (36a ; 36b), en particulier au moins deux éléments de déplacement (46a, 48a ; 46b, 48b) de l'unité de déplacement (36a ; 36b), est entraînée en parallèle par les au moins deux unités d'entraînement (42a, 44a ; 42b, 44b) afin de générer un déplacement vertical des au moins deux mâchoires de scellement (18a, 20a ; 18b, 20b).

9. Procédé selon la revendication 7 ou 8, **caractérisé en ce que,** dans une étape de processus (58a ; 58b), l'unité de déplacement (36a ; 36b), en particulier au moins deux éléments de déplacement (46a, 48a ; 46b, 48b) de l'unité de déplacement (36a ; 36b), est entraînée dans des directions opposées par les au moins deux unités d'entraînement (42a, 44a ; 42b, 44b) afin de générer un déplacement horizontal des au moins deux mâchoires de scellement (18a, 20a ; 18b, 20b).

10. Machine verticale de formage-remplissage-scellement (10a ; 10b) comprenant au moins un cadre de machine (12a ; 12b) et au moins le dispositif de scellement transversal (14a ; 14b) selon l'une quelconque des revendications 1 à 6.
